# EUROPÄISCHE PATENTANMELDUNG

(11) **EP 3 777 987 A1**
(43) Veröffentlichungstag der Anmeldung: **17.02.2021**
(21) Anmeldenummer: 20189646.1
(22) Anmeldetag: 05.08.2020
(51) Int. Cl.: B01D 1/22, B01D 3/12, B01J 19/20

(54) **VORRICHTUNG ZUR THERMISCHEN BEHANDLUNG VON MATERIAL, INSBESONDERE ZUR THERMISCHEN AUFTRENNUNG VON IM MATERIAL ENTHALTENEN MATERIALKOMPONENTEN**

(30) Priorität: 12.08.2019 CH 10052019
(71) Anmelder: Buss-SMS-Canzler GmbH, 35510 Butzbach (DE)
(72) Erfinder: NAEF, Rainer, 8953 Dietikon (CH); BÖING, Johannes, 52385 Nideggen (DE); RÜGER, Michael, 91080 Uttenreuth (DE)
(74) Vertreter: Schaad, Balass, Menzl & Partner AG

(57) **Zusammenfassung**

Die vorliegende Erfindung betrifft eine Vorrichtung zur thermischen Behandlung von niedrigviskosem, viskosem oder feststoffbelastetem Material, insbesondere zur thermischen Auftrennung von im Material enthaltenen Materialkomponenten. Die Vorrichtung umfasst ein Gehäuse (12) mit einem beheizbaren Gehäusemantel (14), welcher eine Behandlungskammer (16) umschliesst und eine rotationssymmetrische, sich in Achsrichtung (A) erstreckende Behandlungsfläche (18) bildet, und einen in der Behandlungskammer angeordneten und sich koaxial erstreckenden, antreibbaren Rotor (26) zur Erzeugung eines Materialfilms auf der Behandlungsfläche. Der Rotor umfasst eine Welle (28), über deren Umfang verteilt Streichelemente (30) angeordnet sind. Die Vorrichtung umfasst zudem einen Kondensationsraum (32), in welchem ein Kondensator (34) angeordnet ist und in welchen bei der thermischen Behandlung aus dem Material entweichende gasförmige Materialkomponenten gelangen können, einen Kondensatauslass (82) zum Austragen der im Kondensationsraum kondensierten Materialkomponenten und einen mit dem Kondensationsraum strömungsverbundenen Vakuumanschluss (56) zum Abziehen der nicht-kondensierten gasförmigen Materialkomponenten. Die erfindungsgemässe Vorrichtung ist dadurch gekennzeichnet, dass der Vakuumanschluss (56) in einem in Transportrichtung des Materials betrachtet nach der Behandlungsfläche (18) liegenden Bereich des Gehäuses (12) angeordnet ist.

## Beschreibung

Die Erfindung betrifft eine Vorrichtung zur thermischen Behandlung von Material, insbesondere zur thermischen Auftrennung von im Material enthaltenen Materialkomponenten, gemäss dem Oberbegriff des Anspruchs 1, und insbesondere einen Kurzwegverdampfer.

Kurzwegverdampfer werden zur thermischen Behandlung von temperaturempfindlichen Materialien eingesetzt mit dem Ziel, das Material zu konzentrieren oder zu entgasen bzw. die dabei aus dem Material entweichenden gasförmigen Materialkomponenten wahlweise zu destillieren.

Das Prinzip der Kurzwegverdampfung beruht darauf, dass ein dem Verdampfer zugeführtes Stoffgemisch, welches im Folgenden als "Material" bezeichnet wird, an einer eine Verdampfungsfläche bildenden Behandlungsfläche erhitzt wird und die dabei entweichenden gasförmigen Materialkomponenten an einer der Verdampfungsfläche gegenüberliegenden Kondensatorfläche kondensieren. Dabei wird der Abstand zwischen der Verdampfungsfläche und der Kondensatorfläche sehr gering gewählt, um Druckverluste über den Weg von der Verdampfungsfläche zur Kondensatorfläche zu minimieren. Dies erlaubt es, in Kurzverdampfern mit sehr niedrigen Betriebsdrücken bis 0,001 mbar und entsprechend niedrigen Siedetemperaturen zu arbeiten.

Beispielhafte Kurzwegverdampfer werden etwa in der EP 2 039 408 A1 und der EP 2 039 409 A1 beschrieben.

So wird in EP 2 039 408 A1 konkret ein Kurzwegverdampfer beschrieben, welcher oberhalb des Kondensators eine scheibenförmige, um die Längsachse des Gehäuses drehbare und während des Betriebs rotierende Rotorplatte aufweist, an deren peripherem Randbereich eine Aufhängung angeordnet ist mit daran umlaufend angeordneten Verteilungsmitteln zur Verteilung des zugeführten Materials auf der Verdampfungsfläche. Konkret können diese Verteilungsmittel gemäss der EP 2 039 408 in Form von Wischblättern vorliegen, welche in Umfangsrichtung in regelmässigen Abständen und in axialer Richtung derart versetzt zueinander angeordnet sind, dass sie auf einer um die Längsachse herum verlaufenden Spirale liegen.

Die in EP 2 039 408 A1 und EP 2 039 409 A1 beschriebenen Kurzwegverdampfer sind auf relative tiefviskose Stoffgemische ausgelegt, welche auf der Verdampfungsfläche aufgrund der Gravitation nach unten fliessen und auf diesem Weg permanent auf der Verdampfungsfläche ausgestrichen werden, wodurch die Verweilzeit erhöht wird.

Weiter wird in DE 1 444 326 A eine Vorrichtung zum Verdampfen, Trennen oder Destillieren von Flüssigkeiten mit einer beheizten, zu einer vertikalen Achse rotationssymmetrischen Trägerfläche beschrieben, auf welcher die Flüssigkeit in dünner Schicht nach unten fliessen kann. Dabei wird zum Ausbreiten der Flüssigkeitsschicht auf der Trägerfläche ein Streichorgan vorgesehen, welches schraubenlinienförmig verläuft, um die Achse drehbar ist und während der Rotationsbewegung in axiale Schwingungen versetzt wird, die in der Flüssigkeitsschicht Interferenzwellen erzeugen.

Allerdings sind die in EP 2 039 408 A1, EP 2 039 409 A1 und DE 1 444 326 beschriebenen Kurzwegdampfer für Materialien bzw. Stoffgemische mit hoher Viskosität nicht oder nur beschränkt geeignet. So liegt die Viskositätsobergrenze für konventionelle Kurzwegverdampfer üblicherweise bei ca. 25 Pas, da gewährleistet sein muss, dass das zu behandelnde Gut unter Einwirkung der Schwerkraft nach unten fliessen kann.

Mit der thermischen Behandlung hochviskoser Produkte unter gleichzeitiger Gewährleistung einer gleichmässigen Verteilung des zu behandelnden Guts auf der Behandlungsfläche befasst sich die DE 195 35 817 A1. In diesem Zusammenhang wird eine Vorrichtung beschrieben, welche ein Kernrohr aufweist, an dem parallel zur Rotorachse angeordnete, winkelförmige Stegbleche angeschweisst sind, an deren Aussenseite Blattelemente schraubenförmig angeordnet sind. Obschon damit im Vergleich zu den oben beschriebenen Verteilelementen bzw. Streichorganen die Verweilzeit von viskosem Material verkürzt werden kann, ist die Vorrichtung für die Behandlung von sehr hochviskosen Materialien, insbesondere Materialien mit einer Viskosität weit höher als 25 Pas, nur beschränkt geeignet.

Gemäss der in DE 195 35 817 A1 beschriebenen Vorrichtung besteht der Rotor aus zwei koaxialen Rotoreinheiten. Dabei werden in einer äusseren Kammer die Brüden im Gleichstrom mit dem Produkt geführt, worauf bei der Umlenkung in eine innere Kammer die Trennung der Brüden vom Produkt erfolgt.

Der Austritt der gasförmigen flüchtigen Komponenten erfolgt dann im Oberteil der Vorrichtung über einen Brüdenauslass-Stutzen. Der Druck in der äusseren Kammer und in der inneren Kammer beträgt dabei etwa 0,5 bis 1,0 mbar.

Allerdings besteht das Bedürfnis nach Kurzwegverdampfern, welche die Verarbeitung von Materialien in einem sehr breiten Viskositätsbereich, insbesondere einem Bereich von 0,1 mPas bis 15'000 Pas, bei Prozessdrücken im gesamten Feinvakuumbereich (1 bis 0,001 mbar) abdecken und gleichzeitig eine hohe Produktqualität sicherstellen.

Aufgabe der Erfindung ist es somit, eine Vorrichtung zur thermischen Behandlung von Material, insbesondere zur thermischen Auftrennung von im Material enthaltenen Materialkomponenten, zur Verfügung zu stellen, welche es erlaubt, für die zu behandelnden Materialien auch dann eine gute Auftrennung von im Material enthaltenen Materialkomponenten zu erzielen, wenn sehr tiefe Prozessdrücke vorliegen. Insbesondere soll damit erreicht werden, dass auch für temperaturempfindliche und/oder hochviskose Materialien, für welche in der Vorrichtung Prozessdrücke im Feinvakuumbereich angelegt werden, eine gute Trennleistung bzw. eine hohe Produktqualität erreicht wird.

Die erfindungsgemässe Aufgabe wird gelöst durch die Vorrichtung nach Anspruch 1. Bevorzugte Ausführungsformen sind in den abhängigen Ansprüchen wiedergegeben.

Obwohl die Vorrichtung für die Behandlung von Materialien in einem sehr breiten Viskositätsbereich anwendbar ist, ist sie insbesondere auf die thermische Behandlung von viskosem Material, insbesondere auf die thermische Auftrennung von in viskosem Material enthaltenen Materialkomponenten ausgerichtet. Sie betrifft insbesondere einen Kurzwegverdampfer.

Die Vorrichtung umfasst ein Gehäuse mit einem beheizbaren Gehäusemantel, welcher eine Behandlungskammer umschliesst und eine rotationssymmetrische, sich in Achsrichtung erstreckende Behandlungsfläche bildet. Die Vorrichtung ist typischerweise vertikal ausgerichtet; die Achsrichtung, auf die im Rahmen der vorliegenden Erfindung Bezug genommen wird, entspricht somit in der Regel der Vertikalen.

In einem Einlassbereich des Gehäuses ist ein Materialeinlass zum Einführen des zu behandelnden Materials in die Behandlungskammer angeordnet, während in einem Auslassbereich des Gehäuses ein Materialauslass zum Austragen des Materials aus der Behandlungskammer angeordnet ist. Dieser Materialauslass ist bei der vertikal ausgerichteten Vorrichtung somit in einem unteren Bereich des Gehäuses angeordnet, während der Materialeinlass weiter oben angeordnet ist.

Die Vorrichtung weist zudem einen in der Behandlungskammer angeordneten und sich koaxial erstreckenden, antreibbaren Rotor zur Erzeugung eines Materialfilms auf der Behandlungsfläche auf, wobei der Rotor eine Welle umfasst, über deren Umfang verteilt Streichelemente angeordnet sind, deren radial äusserstes, d.h. peripheres, Ende von der Behandlungsfläche beabstandet ist. Typischerweise liegt der Abstand des peripheren Endes der Streichelemente und der Behandlungsfläche im Bereich von ca. 0,5 bis 5 mm, vorzugsweise 1 bis 5 mm, wobei er in manchen Fällen, insbesondere bei sehr grossvolumigen Vorrichtungen, bis zu 8 mm betragen kann.

Die Vorrichtung umfasst zudem einen Kondensationsraum, in welchem ein in der Regel statischer Kondensator angeordnet ist und in welchen bei der thermischen Behandlung aus dem Material entweichende gasförmige Materialkomponenten gelangen können. In der Regel liegt die Welle als Hohlwelle vor, welche den Kondensationsraum umschliesst und welche Durchlassöffnungen für die bei der thermischen Behandlung aus dem Material entweichende gasförmige Materialkomponenten aufweist. Die Hohlwelle ist in der Regel zylinderförmig, insbesondere kreiszylinderförmig, ausgestaltet, wobei die Durchlassöffnungen in der Zylindermantelfläche angeordnet sind. Denkbar ist auch, dass der Kondensator in einem in Transportrichtung des Materials auf den Rotor nachfolgenden unteren Bereich der Vorrichtung angeordnet ist.

Die Vorrichtung umfasst zudem einen Kondensatauslass zum Austragen der im Kondensationsraum kondensierten Materialkomponenten und einen mit dem Kondensationsraum strömungsverbunden Vakuumanschluss zum Abziehen der nicht-kondensierten Materialkomponenten auf. Der Vakuumanschluss stellt somit den Brüdenauslass der Vorrichtung dar. Erfindungsgemäss ist der Vakuumanschluss in einem in Transportrichtung des Materials betrachtet nach der Behandlungsfläche liegenden Bereich des Gehäuses angeordnet. Da die Vorrichtung in der Regel vertikal ausgerichtet ist und die Transportrichtung nach unten verläuft, entspricht der Bereich, in dem der Vakuumanschluss angeschlossen ist, somit dem unteren Bereich des Gehäuses. Für den Fall, dass der Kondensator in einem von einer Hohlwelle umschlossenen Kondensationsraum angeordnet ist, ist der Vakuumanschluss somit auch in einem Bereich des Gehäuses unter dem Kondensator angeordnet. Die Vorrichtung unterscheidet sich damit von den bekannten Vorrichtungen, welche etwa in DE 195 35 817 A1 beschrieben werden und welche einen Brüdenauslass-Stutzen im oberen Teil des Gehäuses aufweisen.

Gemäss der vorliegenden Erfindung wird durch die Anordnung des Vakuumanschlusses erzielt, dass ein Strömungsweg der aus dem Material entweichenden gasförmigen Komponenten vorgegeben wird. Dies ist gerade bei sehr tiefen Prozessdrücken von weniger als 1 mbar von Relevanz, da dabei keine Kontinuumsströmung mehr vorliegt, bei welcher der Verdampfungsraum gleichmässig mit Gasmolekülen ausgefüllt ist und sich das Gas bzw. die einzelnen Moleküle bevorzugt in eine Richtung bewegen. So wurde festgestellt, dass in einem Prozessdruckbereich von 1 bis 0,001 mbar, d.h. dem sog. Feinvakuum, eine Knudsen-Strömung vorliegt, bei welcher die Gasmoleküle nicht mehr miteinander wechselwirken und keine bevorzugte Strömungsrichtung mehr vorliegt.

Durch die erfindungsgemäss erzielte Vorgabe des Strömungswegs wird in einem Prozessdruckbereich von 0,001 bis 1 mbar die Wahrscheinlichkeit erhöht, mit der die Gasmoleküle auf den innenliegenden Kondensator treffen, womit letztendlich das Erreichen einer hohen Kondensatqualität ermöglicht wird.

Gemäss einer besonders bevorzugten Ausführungsform ist der Vakuumanschluss derart ausgestaltet, ein Vakuum direkt am Kondensationsraum anzuschliessen. Der Begriff "Vakuum" bezieht sich dabei im Besonderen auf ein Feinvakuum im Druckbereich von 1 bis 0,001 mbar. In der Regel ist der Vakuumanschluss gegenüber der Behandlungskammer abgedichtet.

Weiter ist bevorzugt, dass lediglich in einem in Transportrichtung des Materials betrachtet nach der Behandlungsfläche liegenden Bereich des Gehäuses ein Vakuumanschluss angeordnet ist. Mit anderen Worten ist in dieser Ausführungsform im oberen Bereich des Gehäuses kein Vakuumanschluss angeordnet.

Im Zuge der vorliegenden Erfindung hat sich gezeigt, dass die durch die erfindungsgemässe Anordnung des Vakuumanschlusses erzielten Vorteile einer hohen Kondensatqualität auch für Vorrichtungen mit einem Starrflügelrotor oder Hochviskosrotor möglich sind. Solche Rotoren ermöglichen die Bearbeitung sehr hochviskoser Materialien und weisen im Übrigen den Vorteil auf, dass das Problem eines Materialabriebs, wie er bei beweglichen Wischerelementen aufgrund der möglichen Berührung mit der Gehäuseinnenwand auftreten kann, nicht vorliegt.

In Abhängigkeit von der Baugrösse und im Hinblick auf die Verarbeitung hochviskoser Materialien kann die Vorrichtung vorzugsweise ein unteres Rotorlager aufweisen, in welchem der Rotor in seinem materialauslassseitigen Endbereich gelagert ist. Die Vorrichtung unterscheidet sich damit von bekannten Vorrichtungen, in welchem der Rotor antriebsseitig, d.h. oberhalb der Behandlungskammer bzw. der Prozesszone, fliegend oder hängend gelagert ist und keine weiteren Lager aufweist. Das untere Rotorlager nimmt in der Regel sowohl Axialkräfte als auch Radialkräfte auf. Typischerweise liegt gemäss dieser Ausführungsform zusätzlich zum unteren Rotorlager ein antriebsseitiges oberes Rotorlager vor.

Im Hinblick darauf, bei der Verarbeitung von insbesondere hochviskosen Materialien eine verbesserte Trennleistung zu erzielen, ist weiter bevorzugt, dass das untere Rotorlager zentral angeordnet ist, da dadurch eine gegenüber einem Umfangslager mit z.B. Teflon-Gleitklötzen verbesserte radiale Führung ermöglicht wird. Aufgrund der verbesserten radialen Führung können gemäss dieser Ausführungsform nebst Rotoren mit beweglichen bzw. federbelasteten Wischerblättern auch problemlos Starrflügelrotoren eingesetzt werden. So wird durch die verbesserte Führung bzw. Begrenzung der Freiheitsgrade verhindert, dass eine Berührung zwischen den starren Streichelemente und der Gehäuseinnenwand bzw. der Behandlungsfläche auftritt. Zudem können möglicherweise bei der Rotation auftretende Vibrationen aufgrund des vorliegenden unteren zentralen Rotorlagers wirksam verhindert werden.

Gemäss einer weiteren bevorzugten Ausführungsform führt der Materialauslass in Achsrichtung nach unten und ist insbesondere in Form einer sich in Achsrichtung an die Behandlungskammer anschliessenden Austragsvorrichtung ausgebildet. Die zentrale Anordnung des Materialauslasses gemäss dieser Ausführungsform begünstigt zudem, dass mit der erfindungsgemässen Vorrichtung sehr hochviskose Materialien mit einer hohen Trennleistung bearbeitet werden können.

Konkret kann die Austragsvorrichtung etwa in Form eines Trichters mit einem konischen Zulaufbehälter und einer standgeregelten Pumpe vorliegen. Damit unterscheidet sich die Vorrichtung weiter von vorbekannten Kurzwegverdampfern, wie etwa dem in EP 2 039 409 gezeigten, in welchen das Material seitlich, in der Regel über eine Tasse, aus der Behandlungskammer ausgeführt wird.

Gemäss einer besonderen Ausführungsform kann eine von unten angebaute und angetriebene Austragshilfe, insbesondere eine Förderschnecke, vorgesehen sein, welche das Produkt einer seitlich angeordneten Pumpe zuführt. Gemäss einer weiteren besonderen Ausführungsform ist denkbar, die Austragshilfe direkt an das beschriebene Lager anzuschliessen und mit der gleichen Drehzahl wie der Rotor das behandelte Material einer unten angeordneten Austragspumpe zuzuführen.

Damit wird auch bei einer sehr hohen Viskosität des fertig behandelten, auszutragenden Materials eine relativ hohe Austragsförderrate gewährleistet und ein Aufstauen vor dem Materialauslass minimiert oder verhindert.

Gemäss einer spezifischen Ausführungsform sind die Streichelemente mindestens teilweise als Förderelemente ausgestaltet, welche dem Material eine Förderkomponente in Richtung vom Materialeinlass zum Materialauslass hin, d.h. in der Regel nach unten, verleihen. Denkbar ist aber auch, dass den Streichelementen hauptsächlich eine verteilende Funktion zukommt.

Konkret umfasst der Begriff "Streichelement" fest am Rotor angebrachte und gegenüber dem Rotor unbewegliche Flügel, Blätter oder Zähne, wie sie in sogenannten Starrflügelrotoren vorliegen. Zudem werden vom Begriff bewegliche, insbesondere federbelastete Wischerelemente umfasst, wie etwa bewegliche Wischerelemente vom Typ "Sambay" oder Wischerblöcke eines "Smith"-Rotors, welche bei Bewegung des Rotors durch die Zentrifugalkraft gegen die Behandlungsfläche gedrückt werden.

Gemäss einer weiteren spezifischen Ausführungsform sind mindestens in einem Längsabschnitt des Rotors, insbesondere in einem zentralen Längsabschnitt, die Streichelemente teilweise als Förderelemente ausgestaltet und teilweise als von der Hohlwelle abstehende Verteilelemente, welche Zähne umfassen, deren Scherkante bezogen zur Achsrichtung einen Winkel kleiner als 45° einschliesst.

Typischerweise liegen somit Streichelemente vor, denen primär eine Förderfunktion zukommt und die somit ein Förderelement bilden, und Streichelemente, die in erster Linie eine Verteilfunktion übernehmen und somit Verteilelemente bilden.

Aufgrund des Vorliegens der Förderelemente wird einerseits gewährleistet, dass auch sehr hochviskose Materialien mit einer ausreichend hohen Förderrate durch die Behandlungskammer hindurch gefördert werden und somit die Verweilzeit bzw. die Behandlungsdauer, während welcher das Material erhöhten Temperaturen und hohen Scherraten ausgesetzt wird, ausreichend tief gehalten werden kann. Andererseits wird durch das Vorliegen der Verteilelemente eine sehr gute Verteilung und eine optimale Oberflächenerneuerung auf der Behandlungsfläche auch dann gewährleistet, wenn das Material eine sehr hohe Viskosität aufweist.

Letztendlich kann somit eine optimale Behandlung, insbesondere eine hohe Entgasungsrate, von sehr hochviskosem Material erzielt werden und gleichzeitig der Energieeintrag in das Material auf ein Mass beschränkt werden, bei dem das Material keinen Schaden nimmt und insbesondere kein thermisch bedingter Abbau erfolgt.

Die beschriebene Vorrichtung erlaubt es somit, Materialien mit einer hohen Viskosität optimal zu behandeln, insbesondere zu entgasen und in manchen Fällen auch zu reagieren, sei es in Kombination mit der Entgasung oder unabhängig davon. Im Speziellen eignet sich die erfindungsgemässe Vorrichtung für die Behandlung sehr hochviskoser Polymere, bei welchen nach der Polymerisationsreaktion noch im Polymerisat enthaltene Lösemittel und/oder überschüssige oder während einer Reaktion unerwünscht gebildete Monomere oder Oligomere mit relativ hohem Siedepunkt abzutrennen sind. Konkret können mittels einer erfindungsgemässen Vorrichtung, in welcher ein Umfangslager zur Lagerung des Rotors vorliegt, Materialien mit einer Viskosität von bis zu 15'000 Pas behandelt werden. Für die unten beschriebene bevorzugte Ausführungsform, in welcher die Vorrichtung ein unteres zentrales Rotorlager zur Lagerung des Rotors aufweist, liegt die Viskosität des zu behandelnden Materials vorzugsweise in einem Bereich von 1 bis 5'000 Pas, besonders bevorzugt von 50 bis 2'000 Pas.

In besonderem Masse vorteilhaft ist die erfindungsgemässe Vorrichtung für die Behandlung von Polymeren auf der Basis von nachwachsenden Rohstoffen, da diese im Allgemeinen relativ temperaturempfindlich sind. Die erfindungsgemässe Vorrichtung ist insbesondere auch für die Behandlung von Polymeren und hochviskosen Materialien vorteilhaft, die für Anwendungen im Bereich der Medizin, Kosmetik und Lebensmitteltechnologie einen besonders hohen Grad an Entgasung aufweisen sollen. Wie erwähnt ist die Vorrichtung gerade zur Behandlung von relativ temperaturempfindlichen Materialien besonders gut geeignet, weil die Wärmeenergie, der das Material ausgesetzt wird, durch die relativ tief wählbare Temperatur und Verweilzeit auf der Behandlungsfläche, optimal eingestellt werden kann.

Typischerweise liegt die Viskosität des mit der erfindungsgemässen Vorrichtung zu behandelnden Materials im Bereich von 100 bis 15'000 Pas, insbesondere von 1'000 Pas bis 10'000 Pas und im Speziellen von 1'500 Pas bis 6'000 Pas. Die Viskositätswerte beziehen sich dabei auf die Betriebstemperatur und ein Schergefälle von D=10 sec⁻¹.

Was die Betriebstemperatur der erfindungsgemässen Vorrichtung betrifft, so liegt diese im Allgemeinen in einem Bereich von 40 bis 400°C, insbesondere von 150 bis 350°C und im Speziellen von 20 bis 300°C.

Das oben angegebene Merkmal, dass die Streichelemente "mindestens in einem Längsabschnitt des Rotors" teilweise als Förderelemente und teilweise als Verteilelemente ausgebildet sind, bedeutet, dass Ausführungsformen umfasst sind, in welcher diese Ausbildung der Streichelemente über die gesamte Länge des Rotors verwirklicht ist als auch Ausführungsformen, in welchen dies nur über einen Teil der Rotorlänge verwirklicht ist, insbesondere nur in einem zentralen Längsabschnitt.

Wie erwähnt umfassen die Verteilelemente Zähne, die von der Hohlwelle abstehen. Denkbar ist dabei, dass die Zähne in mindestens annähernd radialer Richtung von der Hohlwelle abragen oder aber in einem Winkel zur radialen Richtung. In der Regel sind die Zähne jeweils an einem von mehreren auf der Hohlwelle angeordneten, axial verlaufenden Flanschen fixiert.

Gemäss einer bevorzugten Ausführungsform schliesst die Scherkante mindestens eines Teils der Zähne bezogen zur Achsrichtung einen Winkel im Bereich von 0 bis 40° ein.

Abhängig von der jeweiligen Anwendung kann insbesondere bevorzugt sein, dass besagter Winkel im Bereich von 10 bis 30° liegt und im Speziellen bei ca. 20°. Gemäss dieser Ausführungsform erteilen somit auch die Verteilelemente dem zum behandelnden Material eine Förderkomponente in Richtung zum Materialauslass hin, wobei diese Förderkomponente geringer ist als diejenige der Förderelemente. Denkbar ist für diese Ausführungsform etwa, dass die Zähne ein proximales Teilstück aufweisen, welches in einer parallel zur Achsrichtung verlaufenden Ebene liegt und über welches die Zähne angeflanscht werden, und ein distales Teilstück, das in einer schräg zur Achsrichtung verlaufenden Ebene liegt und dessen radial äusseres Ende die Scherkante bildet.

Je nach Anwendung kann alternativ zu dieser Ausführungsform bevorzugt sein, dass die Scherkante mindestens eines Teils der Verteilelemente einen geringeren als den oben genannten Winkel einschliesst und insbesondere mindestens annähernd parallel zur Achsrichtung verläuft, d.h. bezogen zu dieser einen Winkel von ca. 0° einschliesst. Im letztgenannten Fall sind die Verteilelemente vollkommen förderneutral und haben ausschliesslich verteilende Funktion. Welche konkrete Konfiguration der Verteilelemente gewählt wird, hängt letztendlich vom zu behandelnden Material ab und kann innerhalb der erfindungsgemässen Definition variieren.

Was die Förderelemente betrifft, so umfassen diese mindestens eine Förderrippe, deren radiale Aussenkante bezogen zur Achsrichtung in der Regel einen Winkel grösser als 45° einschliesst. Somit ist auch bei sehr hochviskosem Material die durch das Förderelement verliehene Förderkomponente ausreichend hoch, um eine gewünschte Förderrate durch die Behandlungskammer hindurch zu erhalten.

Vorzugsweise schliesst die radiale Aussenkante der Förderrippe bezogen zur Achsrichtung einen Winkel von höchstens 65° ein. Im Speziellen liegt der Winkel in einem Bereich von 50° bis 60°.

Nebst dem, dass die Förderwirkung eines Förderelementes durch den Anstellwinkel der radialen Aussenkante einer Förderrippe bestimmt wird, kann die Förderwirkung des Förderelementes zusätzlich über die Anzahl der Förderrippen bzw. den Abstand zwischen den in Achsrichtung aufeinanderfolgenden Förderrippen eingestellt werden.

Gemäss einer besonders bevorzugten Ausführungsform umfassen die Förderelemente jeweils ein wenigstens annähernd parallel zur Achsrichtung angeordnetes, winkelförmiges Stegblech, an dessen Aussenseite mindestens eine helikal verlaufende Förderrippe angeordnet ist. Durch die Winkelform wird das Stegblech somit in eine erste und zweite Stegblechfläche unterteilt, welche in zueinander schräg verlaufenden Ebenen liegen.

Nebst der Aussenkante der Förderrippe ergibt sich bei dieser Ausführungsform durch die Winkelform des Stegblechs eine in der Regel axial verlaufende Scherkante, welche gegenüber der radialen Aussenkante der Förderrippe zurückversetzt ist und somit im Vergleich zu dieser von der Behandlungsfläche in einem grösseren Abstand angeordnet ist. Somit trägt gemäss dieser Ausführungsform auch das Förderelement zu einer optimalen Verteilung des Materials auf der Behandlungsfläche bei.

Gemäss einer weiteren bevorzugten Ausführungsform sind in Umfangsrichtung des Rotors die Verteilelemente mit den Förderelementen alternierend angeordnet, da dadurch eine sehr homogene Verteilung des Materials auf der Behandlungsfläche gewährleistet werden kann.

Des Weiteren kann bevorzugt sein, im Bereich des Materialeinlasses die Streichelemente des Rotors lediglich als Förderelemente auszubilden, um insbesondere in diesem Bereich eine hohe Förderrate zu erzielen und damit einem Aufstauen von Material entgegenzuwirken.

Der in der Vorrichtung bzw. in der Behandlungskammer vorliegende Prozessdruckbereich hängt von der jeweiligen Zielsetzung der Vorrichtung ab und liegt typischerweise in einem Bereich von 0,001 mbar bis 50 mbar.

Für eine Vorrichtung, die primär darauf ausgelegt ist, auch bei moderaten Temperaturen eine möglichst hohe Entgasungsrate zu erzielen, liegt im Betrieb in der Behandlungskammer vorzugsweise ein Druck im Bereich von 0,001 mbar bis 1 mbar, besonders bevorzugt von 0,001 mbar bis 0,005 mbar, vor.

Bei einem derart tiefen Prozessdruck bzw. einem derart hohen Vakuum wird vorzugsweise eine Vorentgasungsstufe vorgesehen, die einen Grossteil der flüchtigen Bestandteile des zu behandelnden Materials abtrennt, bevor das Material in die Behandlungskammer eingeführt wird. Damit wird der Gasvolumenstrom in einem handhabbaren Mass gehalten. Vorzugsweise befindet sich das zu behandelnde Material unmittelbar vor der Einführung im Gleichgewicht mit der Gasphase.

Selbstverständlich kann je nach Anwendungsfall der Prozessdruck der Vorrichtung auch höher sein, wenn sich dadurch eine gute Behandlung, insbesondere eine ausreichende Entgasung, gewährleisten lässt.

Denkbar ist etwa auch eine Vorrichtung, die primär auf die Entfernung grosser Brüdenmengen ausgelegt ist, wobei dank der erfindungsgemässen Ausgestaltung der Vorrichtung darauf verzichtet werden kann, die Brüden durch verengende Rohre zu führen, was bei einer Vorrichtung mit einem aussen angeordneten Kondensator in hohen Druckverlusten resultiert. Für diese primär auf die Entfernung grosser Brüdenmengen ausgelegte Vorrichtung kann der Prozessdruck in der Behandlungskammer höher sein und bis zu 50 mbar betragen.

Gemäss einer bevorzugten Ausführungsform und vor allem für niedrigviskose Materialien weist die erfindungsgemässe Vorrichtung zudem eine Verteileinrichtung zum Verteilen des über den Materialeinlass eingeführten Materials auf der Behandlungsfläche auf, wobei die Verteileinrichtung in Form eines am Rotor angeordneten Verteiltellers mit einem Tellerboden und einer den Tellerboden radial umgebenden und vorzugsweise im Wesentlichen senkrecht dazu verlaufenden Tellerwand vorliegt und die Tellerwand in Umfangsrichtung voneinander beabstandete Öffnungen aufweist. In Betrieb wird das eingeführte und auf den Tellerboden gelangende Material während der Rotation des Rotors radial nach aussen gedrückt, wobei es durch die Verteilöffnungen hindurch auf die Behandlungsfläche gelangt. Damit wird ein Überschwappen des eingeführten Materials verhindert und eine gleichmässige Verteilung des Materials über den Umfang der Behandlungsfläche erzielt, was in einer verbesserten Nutzung der Behandlungsfläche und letztendlich in einer erhöhten Produktqualität und Leistung der Vorrichtung resultiert. Um die Gefahr eines Überschwappens zusätzlich zu verhindern, kann bevorzugt sein, dass die Tellerwand an ihrem oberen Ende einen radial nach innen ragenden Vorsprung aufweist.

Aufgrund dessen, dass das Material bei der Einführung in die Behandlungskammer einer starken Druckverminderung ausgesetzt wird, können nichtsdestotrotz gasförmige Komponenten (im Zuge einer sogenannten "Flash"-Verdampfung) instantan aus dem Material entweichen, was wiederum zu einem Mitriss von Material führen kann. Um zu vermeiden, dass mitgerissenes Material auf die Hohlwelle und letztendlich in den Kondensationsraum gelangen und das Kondensat verunreinigen kann, weist die Vorrichtung gemäss einer bevorzugten Ausführungsform im Bereich des Materialeinlasses einen die Hohlwelle vollständig umgebenden Spritzschutzmantel auf.

Dabei wird gemäss einer möglichst einfachen und daher bevorzugten Ausführungsform der Spritzschutzmantel von den Förderelementen und von jeweils zwei in Umfangsrichtung aufeinanderfolgenden, Förderelemente verbindenden Blechen gebildet. Für die oben genannte Ausführungsform, in welcher die Förderelemente jeweils ein winkelförmiges Stegblech mit mindestens einer an der Aussenseite helikal verlaufenden Förderrippe umfassen, kann somit eine erste Dachseite eines ersten Förderelements mit der zweiten Dachseite eines in Rotationsrichtung dem ersten Förderelement vorauslaufenden zweiten Förderelements verbunden werden, wie im Zusammenhang mit den Figuren weiter ausgeführt wird.

Um auch im Bereich des Materialauslasses ein Aufstauen von Material zu verhindern, sind gemäss einer weiteren bevorzugten Ausführungsform auch in diesem Bereich die Streichelemente des Rotors lediglich als Förderelemente ausgebildet.

In der Regel liegt die Anzahl an in Umfangsrichtung verteilten Streichelementen zwischen 4 und 80, bevorzugt zwischen 6 und 48, und beträgt am meisten bevorzugt zwischen 8 und 32. Dadurch kann eine sehr gute Förderung und Verteilung des Materials während seiner Behandlung auf der Behandlungsfläche erzielt werden. Die optimale Anzahl an Streichelementen hängt dabei von der jeweiligen Anwendung und von der Grösse bzw. dem Durchmesser des Rotors ab.

Wie ebenfalls im Rahmen der Figuren ausgeführt wird, weist gemäss einer besonders bevorzugten Ausführungsform der Rotor zwischen dem Einlassbereich und dem Auslassbereich, in welchen sämtliche Streichelemente als Förderelement ausgestaltet sind, einen Zentralbereich auf, über den sich Förderelemente in axialer Fortsetzung eines Teils der Förderelemente des Einlassbereichs hin erstrecken. Diese alternieren im Zentralbereich jeweils mit einem Verteilelement, welches jeweils ebenfalls in axialer Fortsetzung zu einem Förderelement des Einlassbereichs angeordnet ist.

Wie erwähnt ist der Kondensator erfindungsgemäss in einem Kondensationsraum angeordnet, der von der Hohlwelle umschlossen wird.

Gemäss einer besonders bevorzugten Ausführungsform umfasst der Kondensator ein Innenrohr und ein das Innenrohr konzentrisch umgebendes Aussenrohr. Sowohl das Aussenrohr als auch das Innenrohr weisen jeweils eine Aussenwand und eine Innenwand auf, die mindestens bereichsweise voneinander beabstandet sind und derart im Innenrohr einen Innenrohr-Kühlmediumzirkulationskanal und im Aussenrohr einen Aussenrohr-Kühlmediumzirkulationskanal bilden. Dabei sind der Innenrohr-Kühlmediumzirkulationskanal und der Aussenrohr-Kühlmediumzirkulationskanal miteinander strömungsverbunden. Dabei ist der Kondensator in der Regel derart ausgestaltet, dass in einen der beiden Kühlmediumzirkulationskanäle, also z.B. in den Aussenrohr-Kühlmediumzirkulationskanal, eine Kühlmediumzuleitung mündet und vom jeweils anderen Kühlmediumzirkulationskanal, also im genannten Beispiel vom Innenrohr-Kühlmediumzirkulationskanal, ein Kühlmediumauslass wegführt. Typischerweise sind die Kühlmediumzuleitung und der Kühlmediumauslass in einem unteren Bereich des Kondensators angeordnet und die Verbindung zwischen den Kühlmediumzirkulationskanälen in einem oberen Bereich. Somit strömt das Kühlmedium im Betrieb von einem unteren Bereich des einen Aussen/Innenrohrs nach oben, tritt in einem oberen Bereich in das jeweils andere Rohr über und strömt von dort im Innen- bzw. Aussenrohrs nach unten.

Denkbar ist weiter, dass das Innenrohr und das Aussenrohr jeweils aus einer Platte gebildet werden, in welcher die Innenwand mit der Aussenwand punktuell miteinander verschweisst sind, wobei das sich zwischen der Innenwand und der Aussenwand ergebende Hohlkissen als Kühlmediumzirkulationskanal dient. Für die Schweissverbindung können dabei Schweisskreise vorgesehen sein, während am jeweils oberen und unteren Ende der Platte das Hohlkissen in der Regel über umlaufende Nähte abgeschlossen ist. Dies erlaubt eine sehr leichte und kompakte, aber nichtsdestotrotz sehr stabile Ausgestaltung des Kondensators.

Weiter sind im Aussenrohr in der Regel Fenster angeordnet, welche gewährleisten sollen, dass die gasförmigen Komponenten zur Kondensation auch an das Innenrohr gelangen können. Die Fenster sind dabei vorzugsweise in Längs- und in Umfangsrichtung gleichmässig angeordnet.

Im Vergleich zu von der Erfindung ebenfalls mitumfassten Vorrichtungen, in welchen der Kondensator als Rohrbündelkondensator ausgebildet ist, ergeben sich für die oben genannte besonders bevorzugte Ausgestaltung des Kondensators verbesserte statische Eigenschaften, was gerade im Hinblick auf ein gegenüber herkömmlichen Vorrichtungen erhöhtes L/D-Verhältnis der auf die Behandlung sehr hochviskoser Materialien ausgerichteten erfindungsgemässen Vorrichtung besonders vorteilhaft ist.

Ein Rohrbündelkondensator kann etwa bei sehr grossen Vorrichtungen bevorzugt sein, wobei die Verwendung eines Rohrbündelkondensators auch für kleinere Vorrichtungen nicht ausgeschlossen ist. Vorzugsweise sind die Rohre des Rohrbündelkondensators in zwei konzentrischen Reihen blickdicht versetzt zueinander angeordnet.

Insbesondere im Zusammenhang mit der oben genannten Ausführungsform, gemäss welcher im Bereich des Materialeinlasses ein die Hohlwelle vollständig umgebender Spritzschutzmantel vorliegt, kann somit gewährleistet werden, dass in diesem Bereich das Material im Gleichstrom geführt wird und dass lediglich gasförmige Komponenten abgezogen werden, die den Kondensationsraum passiert haben und somit unter den gegebenen Bedingungen nicht kondensierbar sind (d.h. leichtflüchtige Komponenten darstellen). Dies resultiert letztendlich in einer hohen Kondensationsrate der niedriger siedenden Komponenten des behandelten Materials.

Der Rotor ist in der Regel fliegend gelagert, wobei er wie oben erwähnt in seinem materialauslassseitigen Endbereich zusätzlich in einem unteren Rotorlager gelagert und radial geführt wird.

Wie ebenfalls erwähnt ist das untere Rotorlager dabei vorzugsweise zentral angeordnet.

Denkbar ist auch, dass der Rotor in seinem materialauslassseitigen, d.h. unteren Endbereich mindestens zwei achsensymmetrisch angeordnete Lagerschuhe aufweist und radial von einem Lagerring des Gehäuses geführt wird, welcher zusammen mit den Lagerschuhen ein materialgeschmiertes Lager bildet.

Die Lagerschuhe sind dabei vorzugsweise in einer Art und Weise ausgestaltet, während der Rotation des Rotors Material in den radialen Spalt zwischen Lagerring und Lagerschuh zu drücken. Weiter ist bevorzugt, dass zwischen den Lagerschuhen zusätzlich Förderelemente angeordnet sind, insbesondere Förderelemente gemäss obiger Beschreibung umfassend ein winkelförmiges Stegblech mit mindestens eine an dessen Aussenseite helikal verlaufende Förderrippe. Dadurch wird gewährleistet, dass der Materialtransport durch die radiale Rotorführung bzw. das Lager mindestens annähernd beibehalten werden kann.

Durch die radiale Führung im unteren Bereich des Rotors werden Vorrichtungen mit einem gegenüber herkömmlichen Kurzwegverdampfern sehr hohen L/D-Verhältnis ermöglicht, was gerade im Hinblick darauf, dass die erfindungsgemässe Vorrichtung auf die Behandlung sehr hochviskoser Materialien ausgerichtet ist, besonders vorteilhaft ist.

In der Regel liegt der Materialeinlass der erfindungsgemässen Vorrichtung in Form eines tangential zum Gehäuse ausgerichteten Anschlusses vor; dies im Unterschied zu vorbekannten Kurzwegverdampfern, wie etwa demjenigen gemäss EP 2 039 409, in welchem die Materialzuführung von oben, also durch den die Behandlungskammer oben abschliessenden Deckel erfolgt.

Wie erwähnt ist der Materialauslass vorzugsweise in Form einer sich in Achsrichtung an die Behandlungskammer anschliessenden, also zentral angeordneten, Austragsvorrichtung ausgebildet, womit auch bei einer sehr hohen Viskosität des fertig behandelten, auszutragenden Materials eine relativ hohe Austragsförderrate gewährleistet und ein Aufstauen vor dem Materialauslass minimiert oder verhindert werden kann.

Um zusätzlich sicherzustellen, dass sich allfällig aufstauendes Material nicht an den Kondensator gelangen und den Kondensatauslass verstopfen kann, weist die Vorrichtung gemäss einer weiteren bevorzugten Ausführungsform ein den Kondensator konzentrisch umgebendes statisches Abdeckblech auf. So wird Material, welches bei einem unzureichenden Materialaustrag nach oben gedrückt wird, durch das Abdeckblech vom Kondensator ferngehalten. Hierfür kann bevorzugt sein, dass sich das Abdeckblech nach oben hin konisch verjüngt. Es ist aber auch ein zylindrisches Abdeckblech denkbar.

Insbesondere hinsichtlich der Ausführungsform, in welcher das Abdeckblech zylindrisch ausgebildet ist, ist weiter bevorzugt, dass auf der Höhe des Abdeckblechs der Rotor auf seiner Innenseite eine als Gegenstück zum Abdeckblech ausgebildete Buchse mit einer darauf innenseitig aufgebrachten Förderwendel aufweist. Diese Buchse rotiert somit mit dem Rotor. Die Förderwendel weist eine Förderrichtung nach unten, d.h. zum Materialauslass hin, auf. Der Spalt zwischen der Buchse und dem Abdeckblech ist dabei geringer als der weiter oben ausgebildete Spalt zwischen dem Rotor und dem Kondensator, womit die Förderwendel in einem relativ kurzen Abstand zum Abdeckblech läuft und wodurch letztendlich eine sehr effektive Materialförderung nach unten und eine gute Abdichtung des Kondensatauslasses gewährleistet werden kann.

Ferner ist denkbar, dass ein die Austragsvorrichtung umfassendes Unterteil der Vorrichtung einen grösseren Durchmesser aufweist als die Behandlungskammer bzw. den diese umgebenden Gehäusemantel. Damit kann das Risiko, dass beim Austrag von Material dieses in den Engstellen des Materialauslasses zu einer Verstopfung führt, minimiert werden.

Denkbar ist etwa, dass das Unterteil einen im Wesentlichen zylindrischen Abschnitt auf, der in Förderrichtung, d.h. in Richtung nach unten hin, an die Behandlungskammer anschliesst und eine Materialauffangkammer bildet, welche unten in einen daran anschliessenden Austragstrichter mündet, der sich nach unten hin konisch verjüngt. Vorzugsweise sind der die Materialauffangkammer im Umfang umschliessende zylindrische Mantel und der den Austragstrichters umschliessende Mantel doppelwandig ausgebildet und mit einer Heizmittelzuführung strömungsverbunden, was eine Beheizung dieser Mäntel ermöglicht und eine Erstarrung von Material auf deren Innenfläche mindestens weitgehend verhindert. Vorzugsweise führt der Vakuumanschluss dabei von der Materialauffangkammer durch deren doppelwandigen Mantel weg.

Weiter ist denkbar, dass sich der Kondensator in die Materialauffangkammer erstreckt. Diesbezüglich kann weiter bevorzugt sein, dass der Kondensator in seinem untersten Bereich von einer Zarge umgeben ist, welche in ihrem unteren Bereich zylindrisch ausgebildet ist und sich in ihrem oberen Bereich in Richtung zu ihrem oberen Ende hin konisch verjüngt.

Vorzugsweise sind im zylindrischen unteren Bereich der Zarge in Umfangsrichtung verteilt angeordnete Durchlässe angeordnet, mittels welcher die Materialauffangkammer mit dem Kondensationsraum strömungsverbunden ist und welche mindestens die gleiche freie Querschnittsfläche aufweisen wie der Vakuumanschluss. Um die Durchlässe kann dabei jeweils ein radial vom zylindrischen unteren Bereich der Zarge abstehender Erker ausgebildet sein. Das obere Ende des Erkers ist vorzugsweise giebeldachförmig ausgestaltet, wodurch gewährleistet werden kann, dass das von der Behandlungskammer aufgefangene Material gut abfliessen kann, was weiter durch eine Beheizung der Zarge und der Erker begünstigt werden kann. Hierzu kann die Wand der Zarge sowie die Wand der Erker als Doppelwand ausgebildet sein, wobei der dabei gebildete Hohlraum derart ausgestaltet ist, um von einem Heizmedium durchströmt zu werden.

Durch die Zarge wird der Kondensator davor geschützt, dass sich Material auf diesem absetzt und durch Abkühlung erstarren kann. Zudem wird durch die Erker erreicht, dass die Durchlässe zum Kondensationsraum hin nicht durch Material bedeckt werden, wodurch wiederum gewährleistet wird, dass auch im Kondensationsraum wirksam ein hohes Vakuum angelegt werden kann.

Wie weiter unten im Rahmen der Figuren erläutert wird, wird sowohl der mit dem Kondensator verbundene Kühlmediumzulauf als auch der Kühlmediumauslass jeweils durch einen Erker geführt. Damit wird einerseits verhindert, dass Material auf diese Leitungen gelangen und durch Abkühlung erstarren kann, was zur Bildung schwer zu entfernender Materialablagerungen führen könnte. Andererseits wird verhindert, dass sich Kühlmedium oder Kondensat durch etwaig auf die Kühlmediumzulauf bzw. auf den Kühlmediumauslass gelangendes Material in unerwünschter Art und Weise erhitzt werden kann.

Die Erfindung wird anhand der anliegenden Figuren weiter veranschaulicht.

Es zeigt:
- Fig. 1: eine Vorrichtung gemäss der vorliegenden Erfindung, wobei der Anschaulichkeit halber der Gehäusemantel und die Hohlwelle insoweit aus der Darstellung entfernt wurden, um den Blick auf den Kondensator freizugeben;
- Fig. 2: eine Ansicht des Rotors der Vorrichtung gemäss Fig. 1;
- Fig. 3: eine perspektivische Ansicht einer oberhalb des Materialeinlasses quer zur Achsrichtung geschnittenen Vorrichtung gemäss der vorliegenden Erfindung;
- Fig. 4: einen Querschnitt durch die Vorrichtung gemäss Fig. 3 auf der Höhe des Materialeinlasses;
- Fig. 5: eine Detailansicht der in Fig. 4 gezeigten Förderelemente;
- Fig. 6: eine Ansicht des Kondensators der Vorrichtung gemäss Fig. 1;
- Fig. 7: den in Fig. 6 gezeigten Kondensator im Querschnitt;
- Fig. 8: den in Fig. 6 gezeigten Kondensator im Längsschnitt entlang den in Fig. 7 gezeigten Schnittebenen;
- Fig. 9: einen vergrösserten Längsschnitt des untersten Teils des in Fig. 6 gezeigten Kondensators;
- Fig. 10: eine perspektivische Ansicht des materialauslassseitigen Endbereichs des Rotors;
- Fig. 11: eine weitere Vorrichtung gemäss der vorliegenden Erfindung mit einer Verteileinrichtung, einem Materialauslass in Achsrichtung nach unten und mit einer Schürze zur Umlenkung der nichtkondensierten gasförmigen Materialkomponenten;
- Fig. 12: eine perspektivische Ansicht einer Verteileinrichtung für die in Fig. 11 gezeigte Vorrichtung;
- Fig. 13: eine schematische Darstellung eines unteren Teils einer erfindungsgemässen Vorrichtung mit einer ersten Kondensatorführung;
- Fig. 14: eine schematische Darstellung eines unteren Teils einer weiteren erfindungsgemässen Vorrichtung mit einer zweiten Kondensatorführung;
- Fig. 15: den unteren Teil einer weiteren erfindungsgemässen Vorrichtung in seitlicher Ansicht;
- Fig. 16: den in Fig. 15 gezeigten Teil in der Draufsicht von oben;
- Fig. 17: den in Fig. 15 gezeigten Teil im Längsschnitt durch die darin gezeigte Schnittebene A-A;
- Fig. 18: den in Fig. 15 gezeigten Teil im Querschnitt durch die darin gezeigte Schnittebene C-C;
- Fig. 19: eine perspektivische Ansicht des Kondensators, der den Kondensator umgebenden Zarge und des Materialauslasses der Vorrichtung gemäss Fig. 15;
- Fig. 20: einen Längsschnitt durch den radial aussenliegenden Bereich des in Fig. 15 gezeigten Teils durch die in Fig. 16 gezeigte Schnittebene B-B; und
- Fig. 21: eine weitere Vorrichtung gemäss der vorliegenden Erfindung, in welcher das untere Ende des Kondensators oberhalb des Vakuumanschlusses angeordnet ist.

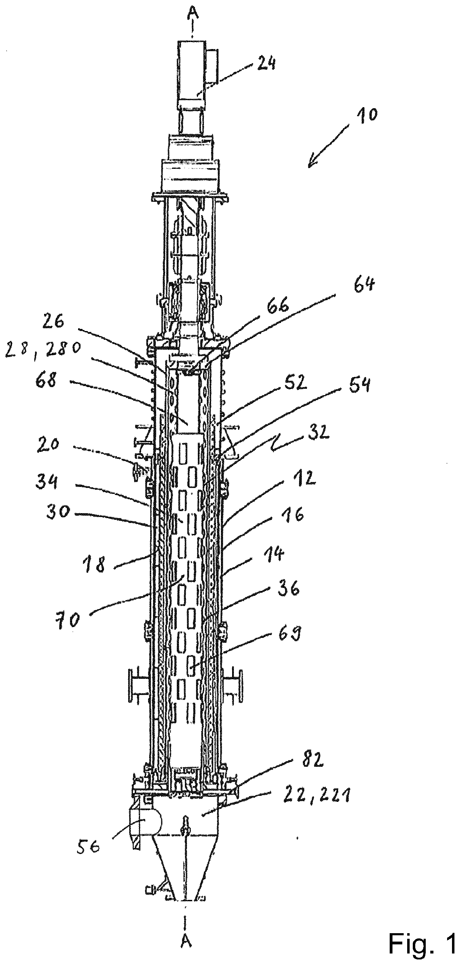

Wie in Fig. 1 gezeigt, umfasst die erfindungsgemässe Vorrichtung 10 ein vertikal ausgerichtetes Gehäuse 12 mit einem beheizbaren Gehäusemantel 14, welcher eine Behandlungskammer 16 umschliesst und auf seiner Innenseite eine rotationssymmetrische, sich in Achsrichtung A erstreckende Behandlungsfläche 18 bildet.

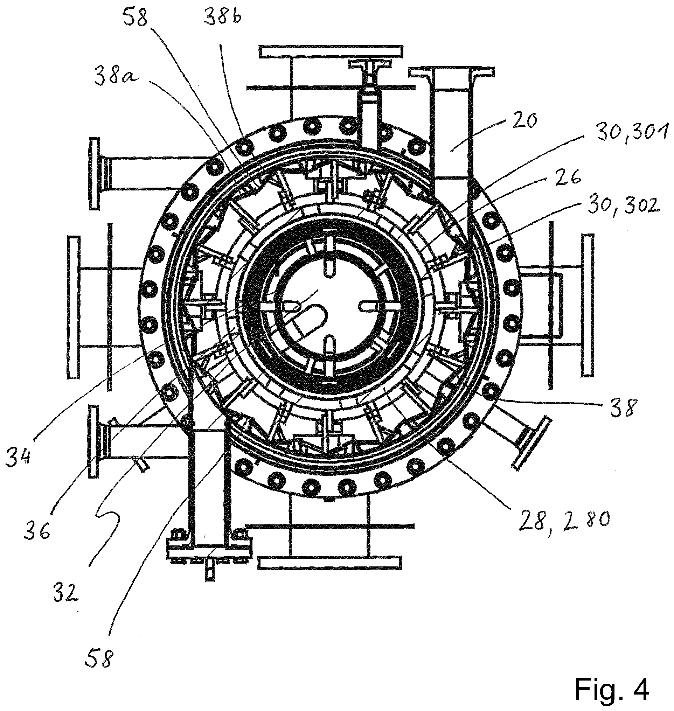

Die Vorrichtung umfasst zudem einen durch den Gehäusemantel 14 hindurchführenden Materialeinlass 20 zum Einführen des zu behandelnden Materials in die Behandlungskammer 16 sowie einen Materialauslass 22. Der tangential zum Gehäusemantel ausgerichtete Materialeinlass 20 ist im Übrigen z.B. in Fig. 4 gezeigt.

In der Behandlungskammer 16 ist ein sich koaxial erstreckender, über eine Antriebseinheit 24 antreibbarer Rotor 26 angeordnet. Dieser umfasst eine in Form einer Hohlwelle 280 vorliegende Welle 28 und über deren Umfang verteilt angeordnete, von der Hohlwelle 280 abstehende Streichelemente 30. Dabei ist das radial äusserste Ende der Streichelemente 30 von der Behandlungsfläche 18 beabstandet, um im Betrieb, d.h. während der Rotation des Rotors 26, das Material zu einem dünnen Materialfilm auf der Behandlungsfläche 18 auszustreichen.

Die Hohlwelle 280 umschliesst einen Kondensationsraum 32, in welchem ein statischer Kondensator 34 angeordnet ist, und weist Durchlassöffnungen 36 auf, durch welche bei der thermischen Behandlung aus dem Material entweichende gasförmige Materialkomponenten in den Kondensationsraum 32 gelangen, um dort am Kondensator 34 kondensieren zu können.

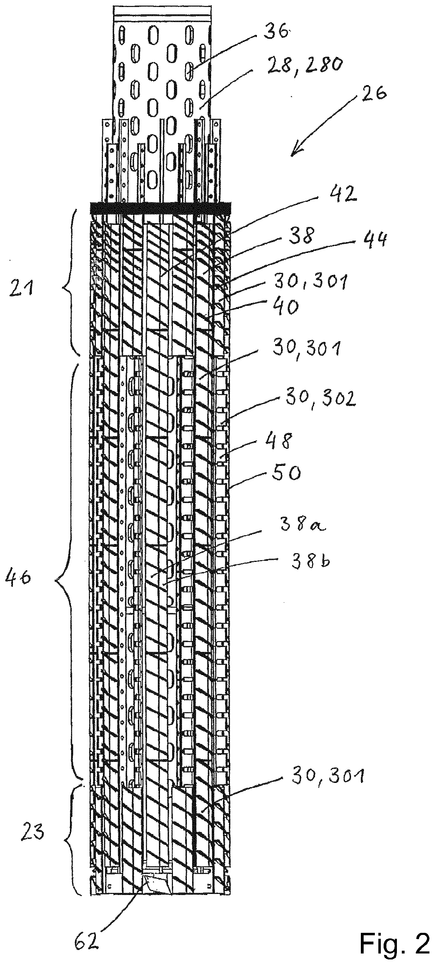

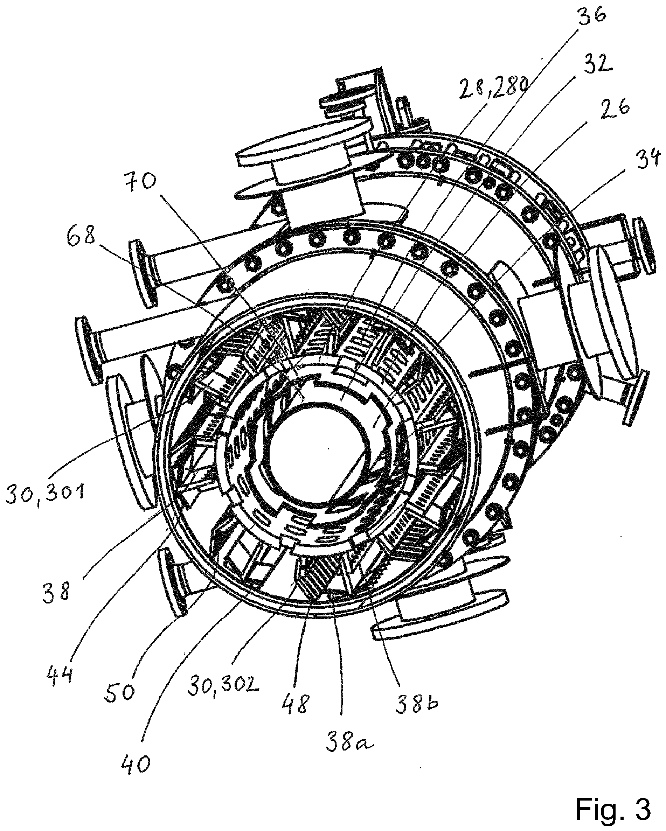

In dem in den Fig. 2 bis 4 gezeigten Rotor 26 sind die Streichelemente in insgesamt 16 parallel zur Achsrichtung verlaufenden Reihen über den Umfang der Hohlwelle 280 verteilt angeordnet.

In einem Einlassbereich 21, d.h. in einem Bereich des Rotors 26 auf der Höhe des Materialeinlasses 20, und in einem Auslassbereich 23 sind sämtliche Streichelemente 30 als Förderelement 301 ausgestaltet, welche dem Material eine Förderkomponente in Richtung vom Materialeinlass 20 zum Materialauslass 22 hin verleihen. Konkret umfassen die Förderelemente 301 ein winkelförmiges Stegblech 38, an deren Aussenseite helikal verlaufende Förderrippen 40 angeordnet sind.

Die Aussenkante dieser Förderrippen 40 schliesst in der gezeigten Ausführungsform bezogen zur Achse des Rotors einen Winkel von ca. 60° ein.

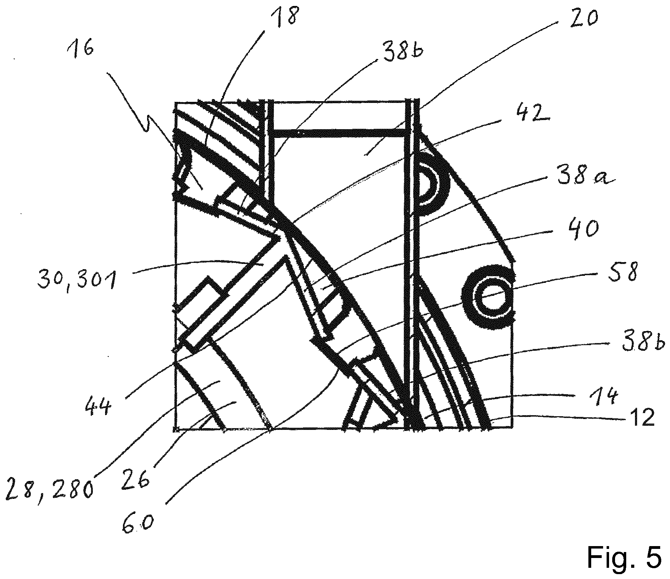

Zudem bildet die Dachspitze des Stegblechs 38 eine axial verlaufende Scherkante 42, welche gegenüber der radialen Aussenkante 44 der Förderrippe 40 zurückversetzt ist und somit im Vergleich zu dieser von der Behandlungsfläche 18 in einem grösseren Abstand angeordnet ist, wie insbesondere in Fig. 5 gezeigt wird. Konkret ist die Dachspitze des Stegblechs 38 bzw. die Scherkante 42 des Förderelements 301 in der gezeigten Ausführungsform ca. 5 mm von der Behandlungsfläche 18 beabstandet, während der Abstand der radialen Aussenkante 44 der Förderrippe 40 von der Behandlungsfläche nur ca. 3 mm beträgt.

Zwischen dem Einlassbereich 21 und dem Auslassbereich 23, in welchem sämtliche Streichelemente 30 als Förderelement 301 ausgestaltet sind, ist ein Zentralbereich 46 angeordnet. In diesem sind lediglich die Hälfte der in Umfangsrichtung verteilten Streichelemente, d.h. im konkreten Fall 8 Streichelemente, in axialer Fortsetzung des jeweiligen Förderelements des Einlassbereichs 21, als Förderelemente 301 ausgebildet. Diese alternieren jeweils mit einem Verteilelement 302, welches jeweils ebenfalls in axialer Fortsetzung zu einem Förderelement 301 des Einlassbereichs 21 angeordnet ist.

Die Verteilelemente 302 ragen radial von der Hohlwelle ab und umfassen in der gezeigten Ausführungsform eine Vielzahl von axial nacheinander angeordneten Zähnen 48. Dabei bildet das radial äusserste Ende der Zähne 48 jeweils eine Scherkante 50, welche parallel zur Achse A des Rotors 26 verläuft. Somit fällt dem Verteilelement 302 primär eine Verteilfunktion mit vernachlässigbarer bzw. nicht vorhandener Förderfunktion zu, während dem in Umfangsrichtung nachfolgenden Förderelement 301 primär eine Förderfunktion zukommt und sekundär - durch die Scherkante 42 des Stegbleches - eine Verteilfunktion. Die aufgrund der axialen Ausrichtung förderneutrale Scherkante 50 der Zähne ist dabei in einem geringeren Abstand von der Behandlungsfläche 18 angeordnet, als dies für die Scherkante 42 des Stegblechs der Förderelemente der Fall ist, wie bereits erwähnt wurde und wie insbesondere in Fig. 5 gezeigt wird. Aufgrund des sich ergebenden engeren Spalts für das Ausstreichen des Materials sind die Verteilelemente 302 somit höher scherend als die Förderelemente 301.

Nebst der Behandlungskammer 16 weist das Gehäuse 12 einen oberhalb davon angeordneten und gegenüber der Behandlungskammer abgedichteten Oberteil 52 auf, in welchen der Rotor 26 und der Kondensator 34 hineinragen. Konkret ist für die Abdichtung zwischen Behandlungskammer 16 und Oberteil 52 etwa eine rotierende Labyrinthdichtung 54 denkbar.

Erfindungsgemäss weist die Vorrichtung einen Vakuumanschluss 56 auf, welcher in einem in Transportrichtung des Materials betrachtet nach der Behandlungsfläche 18 liegenden Bereich 19 des Gehäuses angeordnet ist. Durch die damit erzielte Vorgabe des Strömungswegs der gasförmigen Materialkomponenten wird die Wahrscheinlichkeit erhöht, mit der die Gasmoleküle auf den innenliegenden Kondensator 34 treffen, womit letztendlich das Erreichen einer hohen Kondensatqualität ermöglicht wird

Im Übrigen sind im Einlassbereich 21 jeweils zwei in Umfangsrichtung aufeinanderfolgende Förderelemente 301 mit einem Verbindungsblech 58 verbunden, wie insbesondere in den Fig. 4 und 5 gezeigt wird. Konkret ist eine erste Dachseite 38a des Stegblechs eines ersten Förderelements mit der zweiten Dachseite 38b des Stegbleches eines in Rotationsrichtung dem ersten Förderelement vorauslaufenden zweiten Förderelements verbunden.

Dadurch wird ein die Hohlwelle 280 vollständig umgebender Spritzschutzmantel 60 ausgebildet, welcher verhindert, dass Material, welches bei der Einführung in die Behandlungskammer einer "Flash-Verdampfung" ausgesetzt wird und von den instantan aus dem Material entweichenden gasförmigen Materialkomponenten mitgerissen werden kann, auf die Hohlwelle 280 bzw. in den Kondensationsraum 32 gelangen und letztendlich das Kondensat verunreinigen kann.

Im Bereich, in welchem ein Spritzschutzmantel 60 ausgebildet ist, werden das Material und die bei der Behandlung entweichenden gasförmigen Materialkomponenten somit im Gleichstrom geführt, während in dem in Förderrichtung daran anschliessenden Zentralbereich 46 und im Auslassbereich 23 das Material und die gasförmigen Materialkomponenten im Gegenstrom geführt werden. Somit wird nach einem in Förderrichtung ersten Bereich, in welchem der sich beim Eintritt in das hohe Vakuum bzw. der sich dadurch ergebenden "Flash-Verdampfung" Rechnung getragen wird, in einem zweiten Bereich eine optimale Entgasung erzielt, da ein Kontakt zwischen dem zum behandelnden Material und den angereicherten Brüden minimiert wird.

Der Rotor 26 der gezeigten Ausführungsform ist fliegend gelagert und wird im Auslassbereich 23 radial durch einen Lagerring (nicht gezeigt) geführt, welcher zusammen mit an der Hohlwelle 280 angeordneten, in Fig. 2 gezeigten Lagerschuhen 62 ein materialgeschmiertes Lager bildet. Zu diesem Zweck sind die Lagerschuhe in einer Art und Weise ausgestaltet, um während der Rotation des Rotors 26 Material in den radialen Spalt zwischen Lagerring und Lagerschuh zu drücken.

Wie erwähnt ist der Kondensator 34 in einem von der Hohlwelle 280 umgegebenen Kondensationsraum 32 angeordnet, welcher mit der Behandlungskammer 16 über Durchlassöffnungen 36 verbunden ist zwecks Durchlasses der bei der thermischen Behandlung aus dem Material entweichenden gasförmigen Materialkomponenten und letztendlich der Kondensation der in diesen Materialkomponenten enthaltenen schwererflüchtigen Stoffe.

Der stationär stehende Kondensator 34 wird über einen mittig angeordneten Zapfen 66 stabilisiert, welcher in einer die Hohlwelle 280 oben abschliessenden Platte 64 gehalten wird. In der konkret gezeigten Ausführungsform ist der Zapfen am oberen Ende des über das Aussenrohr hinausragenden Innenrohrs des Kondensators fixiert.

Konkret umfasst der Kondensator 34 ein Innenrohr 68 und ein das Innenrohr konzentrisch umgebendes Aussenrohr 70, wobei das Innenrohr 68 in der Höhe über das Aussenrohr 70 hinausragt und an seinem oberen Ende den erwähnten Zapfen 66 aufweist. Sowohl das Innenrohr 68 als auch das Aussenrohr 70 weisen jeweils eine Aussenwand 681 bzw. 701 und eine Innenwand 682 bzw. 702 auf, die bereichsweise voneinander beabstandet sind und derart einen Spalt für die Zirkulation eines Kühlmediums ausbilden. Somit wird im Innenrohr 68 ein Innenrohr-Kühlmediumzirkulationskanal 683 und im Aussenrohr 70 ein Aussenrohr-Kühlmediumzirkulationskanal 703 ausgebildet, wobei diese miteinander strömungsverbunden sind.

Zudem sind im Aussenrohr in Längs- und in Umfangsrichtung gleichmässig verteilte Fenster 69 angeordnet, welche gewährleisten, dass die gasförmigen Komponenten zur Kondensation auch an das Innenrohr 68 gelangen können.

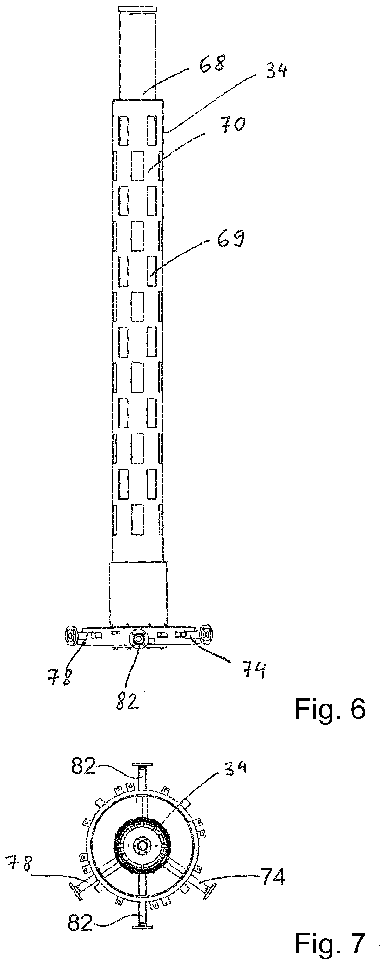

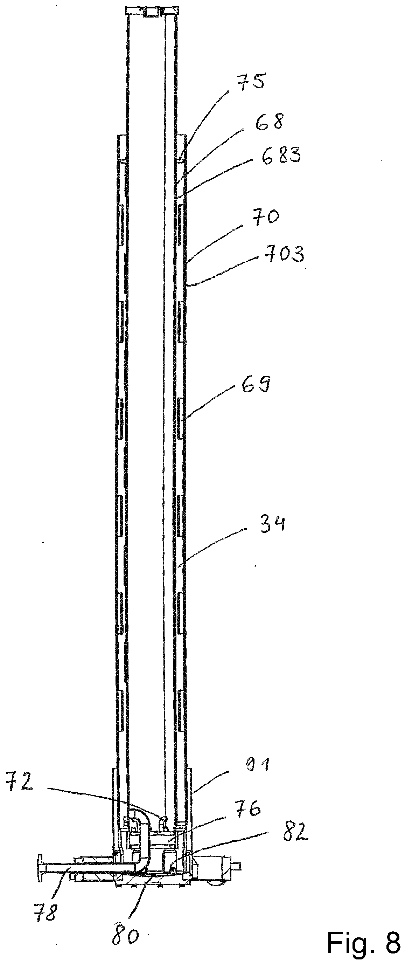

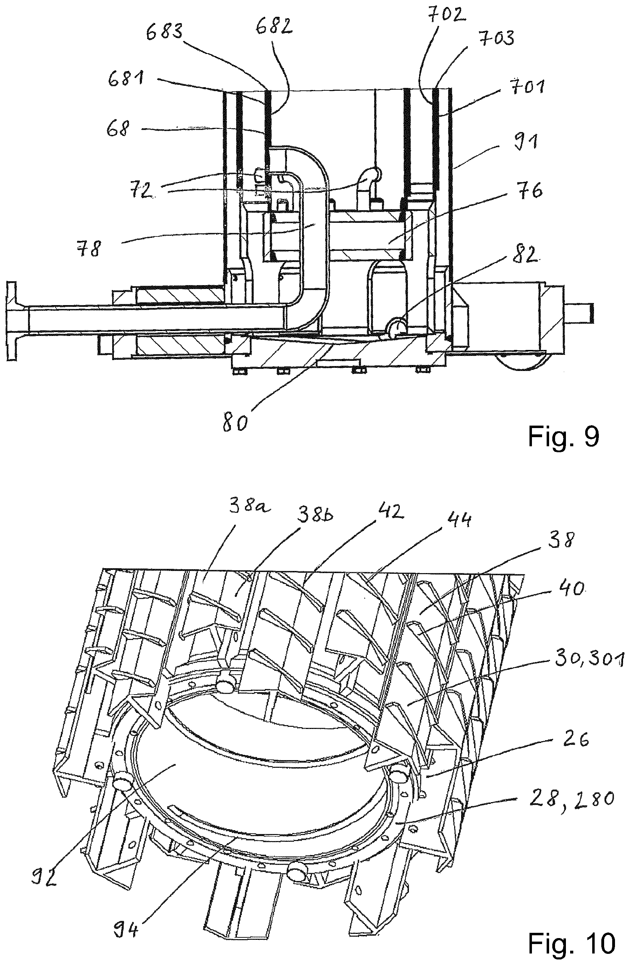

In der konkret gezeigten Ausführungsform bzw. der Detaildarstellung gemäss Fig. 9 münden im Auslassbereich Kühlmediumzuleitungen 72 von einem über einen Kühlmediumzulauf 74 gespeisten Kühlmediumreservoir 76 in den Aussenrohr-Kühlmediumzirkulationskanals 703. Von dort strömt das Kühlmedium nach oben, tritt über einen in Fig. 8 gezeigten Verbindungskanal 75 in den Innenrohr-Kühlmediumzirkulationskanal 683 über und strömt in diesem nach unten, bevor es über einen Kühlmediumauslass 78 aus dem Innenrohr-Kühlmediumzirkulationskanal 683 weggeführt wird. Der Kühlmediumzulauf 74 und der Kühlmediumauslass 78 führen dabei radial vom Gehäuse weg und sind um ca. 120° voneinander beabstandet, wie etwa in Fig. 7 in Zusammenschau mit Fig. 8 gezeigt ist. Während der Zirkulation des Kühlmediums wird Wärmeenergie von den gasförmigen Materialkomponenten über die Kondensatorfläche auf das Kühlmedium übertragen, was letztendlich zur Kondensation der schwererflüchtigen Stoffe auf der Kondensatorfläche führt.

Das dabei entstehende Kondensat fliesst auf der Kondensatorfläche nach unten und letztendlich auf den in Form einer Senke oder Wanne ausgebildeten Kondensatorboden 80, von wo es über entsprechende, von der untersten Stelle des Kondensatorbodens wegführende Kondensatauslässe 82 ausgetragen wird. Konkret sind in der gezeigten Ausführungsform die radial vom Gehäuse wegführenden Kondensatauslässe um 180° beabstandet, wie etwa in Fig. 7 gezeigt ist.

Um das nach der Behandlung vorliegende entgaste viskose Material aus dem Gehäuse auszuführen, ist der Materialauslass 22 in Form einer an die Behandlungskammer anschliessenden und an dieser angeflanschten Austragsvorrichtung 221 ausgestaltet.

Wie aus den Fig. 8 und 9 hervorgeht, weist die Vorrichtung zudem ein den Kondensator 34 konzentrisch umgebendes, statisches Abdeckblech 91 auf, welches in der gezeigten Ausführungsform zylindrisch ist. So wird Material, welches bei einem unzureichenden Materialaustrag nach oben gedrückt wird, durch das Abdeckblech 91 vom Kondensator 34 ferngehalten, wodurch letztendlich auch ein Verstopfen des Kondensatauslasses 82 verhindert werden kann.

Wie in Fig. 10 gezeigt ist, weist der Rotor 26 auf seiner Innenseite eine Buchse 92 mit einer Förderwendel 94 mit Förderrichtung nach unten auf. Diese Buchse 92 ist auf derjenigen Höhe des Rotors 26 angeordnet, die der Höhe des in Fig. 8 und 9 gezeigten Abdeckblechs 91 entspricht, und als Gegenstück zum Abdeckblech ausgebildet. Der Spalt zwischen der Buchse 92 und dem Abdeckblech 91 ist dabei geringer ist als der weiter oben ausgebildete Spalt zwischen dem Rotor 26 und dem Kondensator 34. Während des Betriebs der Vorrichtung wird somit durch die mit dem Rotor rotierende Buchse 92 bzw. der Förderwendel 94 eine sehr effektive Materialförderung nach unten und damit eine gute Abdichtung des Kondensatauslasses 82 gewährleistet.

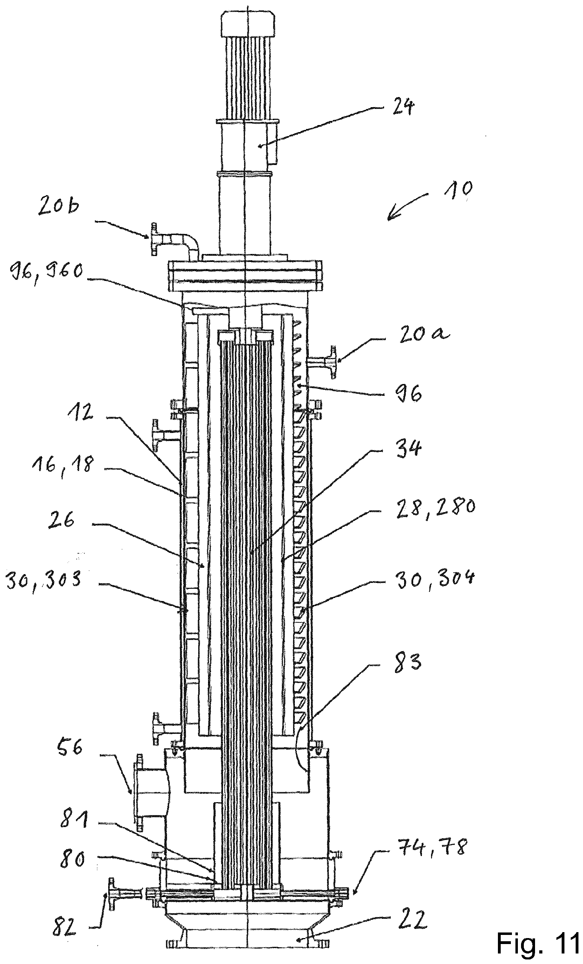

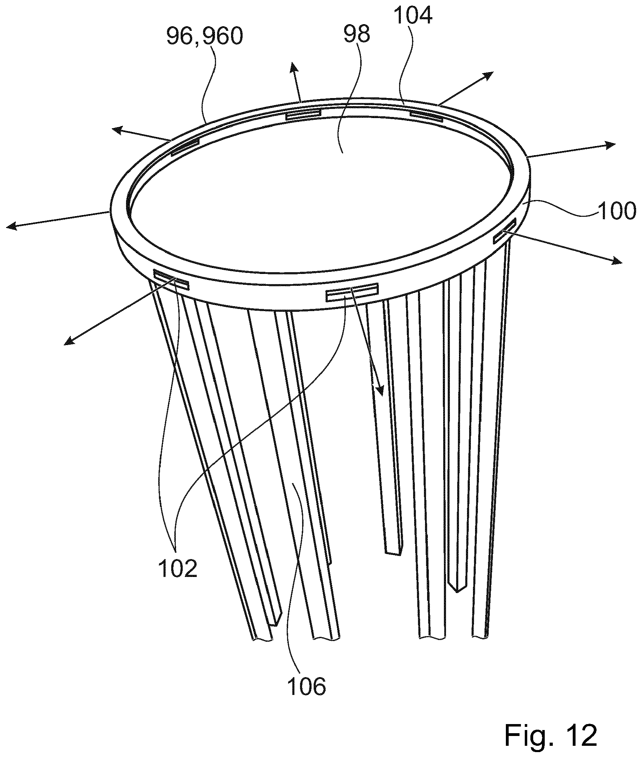

Die in Fig. 11 gezeigte erfindungsgemässe Ausführungsform, in welcher der Vakuumanschluss 56 ebenfalls in einem in Transportrichtung betrachtet nach der Behandlungsfläche 18 liegenden unteren Bereich 19 des Gehäuses angeordnet ist, unterscheidet sich von der in Fig. 1 gezeigten Vorrichtung darin, dass sie zusätzlich eine Verteileinrichtung 96 in Form eines Verteiltellers 960 aufweist, wie er in Fig. 12 gezeigt wird. Der Verteilteller 960 weist einen Tellerboden 98 und eine den Tellerboden radial umgebende und senkrecht dazu verlaufende Tellerwand 100 auf, in welcher in Umfangsrichtung voneinander beabstandete Verteilöffnungen 102 angebracht sind.

Je nachdem, ob hochviskoses oder niedrigviskoses Material in die Vorrichtung 10 eingeführt wird, erfolgt die Einführung über einen tangentialen Materialeinlass 20a (für hochviskoses Material) oder über einen Materialeinlass 20b von oben (für niedrigviskoses Material). Das eingeführte Material gelangt dann auf den Tellerboden 98 des Verteiltellers 960, von wo es während der Rotation des Rotors 26 aufgrund der Zentrifugalkraft radial nach aussen gedrückt wird und durch die Verteilöffnungen 102 in der Tellerwand hindurch auf die Behandlungsfläche 18 gelangt, wo es durch die Streichelemente 30 zu einem dünnen Materialfilm ausgestrichen wird. Um die Gefahr eines Überschwappens zusätzlich zu verhindern, weist die Tellerwand 100 an ihrem oberen Ende einen radial nach innen ragenden Vorsprung 104 auf. Die in Fig. 12 gezeigte Verteilvorrichtung ist in der konkreten Ausführungsform im Zusammenhang mit einem Smith-Rotor gezeigt, welcher U-Schienen 106 aufweist, in welche rechteckige Wischerblöcke eingesetzt werden (nicht gezeigt).

Der Anschaulichkeit halber sind in Fig. 11 unterschiedliche Typen an Streichelementen des Rotors gezeigt, mit welchen jeweils den unterschiedlichen Eigenschaften des Materials, insbesondere dessen Viskosität, Rechnung getragen werden soll. Konkret können die Streichelemente als bewegliche Wischerblätter 303 vorliegen, die durch die Zentrifugalkraft an die Behandlungsfläche 18 gepresst werden, sodass hohe Eindampfverhältnisse bei geringen Ablaufmengen erreicht werden können. Solche Wischerblätter sind besonders für die Verarbeitung von belagbildenden Materialien geeignet. Alternativ dazu können die Streichelemente als federbelastete rechteckige Wischerelemente vorliegen. Denkbar und im Rahmen der vorliegenden Erfindung bevorzugt sind aber starre Streichelemente 304 mit einer in vordefiniertem Abstand zur Behandlungsfläche 18 vorliegenden Scherkante.

Zudem ist in der in Fig. 11 gezeigten Ausführungsform eine Kondensatsammeltasse 81 gezeigt; eine solche kann selbstverständlich auch in der in Fig. 1 gezeigten Ausführungsform vorliegen.

Um die Gefahr zu minimieren, dass Tröpfchen durch einen Mitriss mit dem Gasstrom der nicht-kondensierten Komponenten in den Vakuumanschluss gelangen können, ist in der in Fig. 11 gezeigten Ausführungsform eine zylindrische Schürze 83 vorgesehen, die bewirkt, dass der aus dem Kondensationsraum austretende Gasstrom vor Eintritt in den Vakuumanschluss umgelenkt wird.

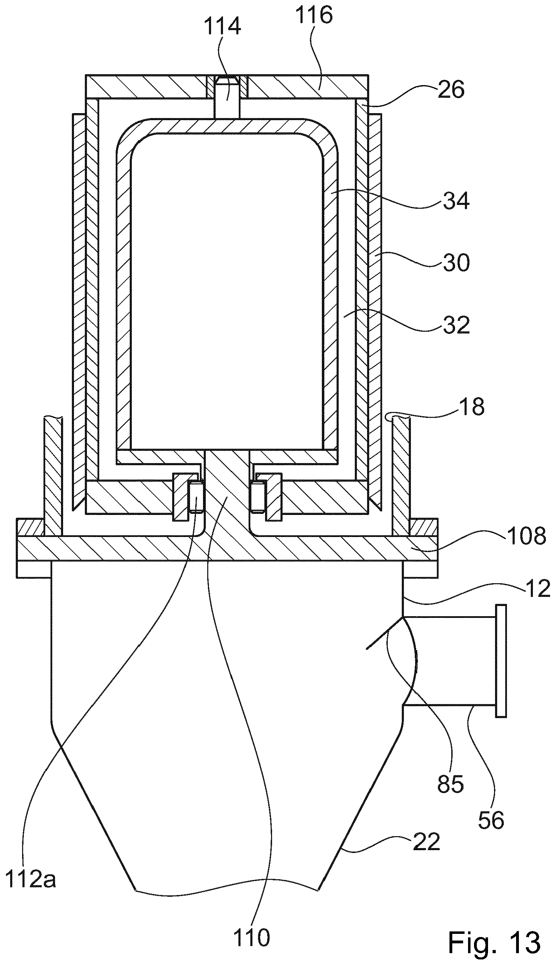

Gemäss der in Fig. 13 gezeigten Ausführungsform erfolgt die Lagerung des Rotors 26 zentral in einer Kondensatorauflage 108. Konkret liegt ein statischer, axial ausgerichteter Zylinder 110 vor, welcher mit der Kondensatorauflage 108 verbunden ist und welcher entsprechende Bohrungen für den Kühlmediumzulauf in den Kondensationsraum 32 bzw. für den Kühlmediumablauf und den Abfluss des Kondensats aus dem Kondensationsraum 32 aufweist. Der Zylinder 110 dient als Lagerzapfen zur Aufnahme des zentralen Rotorlagers 112a, welches etwa als Gleitbuchse oder Wälzlager ausgebildet sein kann. Zusätzlich zur zentralen Lagerung 112a kann eine unterstützende Umfangslagerung vorliegen. Um die Statik des Kondensators 34 zu verbessern, weist dieser einen an seinem oberen Ende angeordneten Zapfen 114 auf, welcher durch eine Oberplatte 116 des Rotors 26 geführt wird.

Die in Fig. 13 gezeigte Kondensatorauflage 108 weist Durchbrüche auf, um zu gewährleisten, dass sowohl das behandelte Material als auch die nicht-kondensierten gasförmigen Komponenten in den Unterteil des Gehäuses 12 gelangen, von wo sie über einen entsprechenden zentralen und nach unten führenden Materialauslass 22 bzw. einen Vakuumanschluss 56 ausgetragen bzw. abgezogen werden. Denkbar ist etwa, dass die Kondensatorauflage 108 radial verlaufende Speichen aufweist und das Material durch die Zwischenräume zwischen den Speichen hindurchtritt.

Um die Gefahr zu minimieren, dass behandeltes Material bzw. durch den Gasstrom mitgerissene Tröpfchen in den Vakuumanschluss 56 gelangen können, ist in der in Fig. 13 gezeigten Ausführungsform ein schräg nach unten ragendes und den Einlass des Vakuumanschlusses bedeckendes Schutzblech 85 vorgesehen.

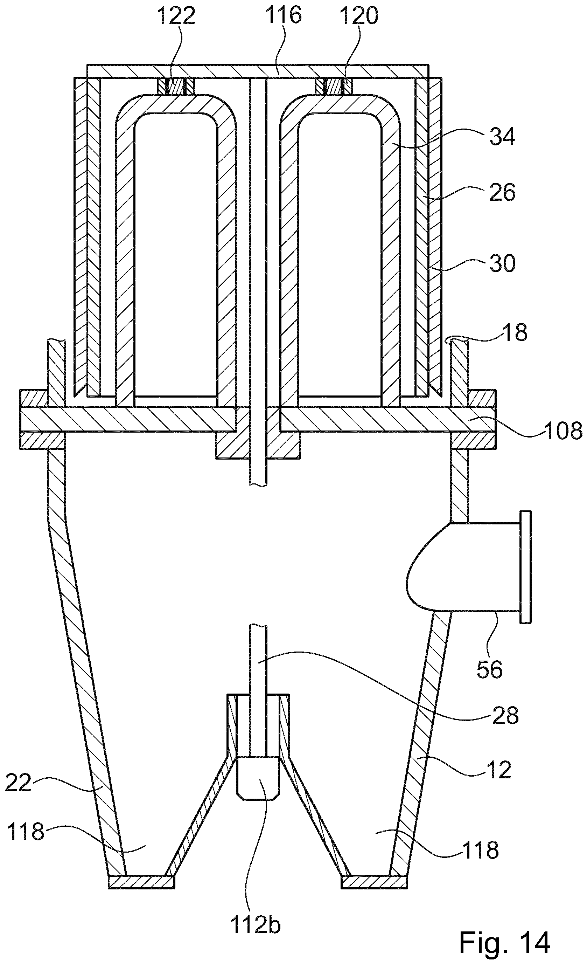

Gemäss der in Fig. 14 gezeigten Ausführungsform wird die Zentralstange der Welle 28 des Rotors 26 durch die Kondensatorauflage 108 zentral hindurchgeführt. Der Rotor 26 ist in dieser Ausführungsform in einem unteren, zentralen, sowohl Axialkräfte als auch Radialkräfte aufnehmenden Rotorlager 112b gelagert, welches ausserhalb des Gehäuses 12 angeordnet ist. Die Abdichtung zur Behandlungskammer erfolgt dabei über eine Gleitringdichtung. Im Gegensatz zu der in Fig. 13 gezeigten Ausführungsform verläuft die Kondensatorführung in der in Fig. 14 gezeigten Ausführungsform ringförmig. Der Materialauslass 22 kann wie in Fig. 14 gezeigt über zwei konische Behälter 118 erfolgen, die nahezu vertikal sind und mittig den Zugang zum Rotorlager 112b ermöglichen. Alternativ kann gerade bei tieferen Viskositäten des Materials und/oder bei tieferen Temperaturen der Materialauslass auch seitlich erfolgen (nicht gezeigt). Zur Verbesserung der Statik des Kondensators 34 liegt in der Vorrichtung gemäss Fig. 14 eine kreisringförmige Schiene 120 vor, welche mit der Oberplatte 116 des Rotors 26 oder dem Kondensator 34 verbunden ist und in welcher eine als Gegenstück zur Schiene ausgebildete und mit dem Kondensator 34 bzw. der Oberplatte 116 verbundene Leiste 122 zur radialen Führung läuft.

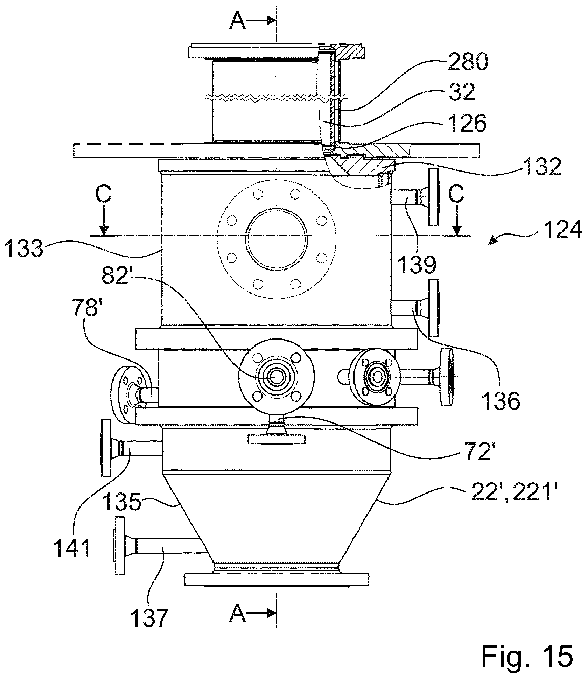

Wie in Fig. 15 gezeigt kann gemäss einer weiteren Ausführungsform das den Materialauslass 22' bzw. den Austragstrichter 221' umfassende Unterteil 124 der Vorrichtung einen grösseren Durchmesser aufweisen als die Behandlungskammer bzw. den diese umgebenden Gehäusemantel. Damit kann das Risiko, dass beim Austrag von Material dieses in den Engstellen des Materialauslasses 22 zu einer Verstopfung führt, minimiert werden.

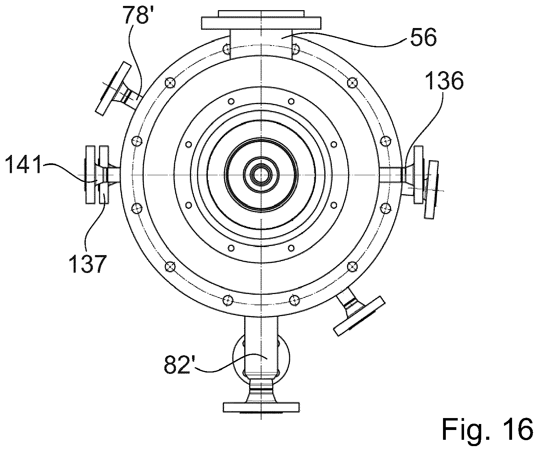

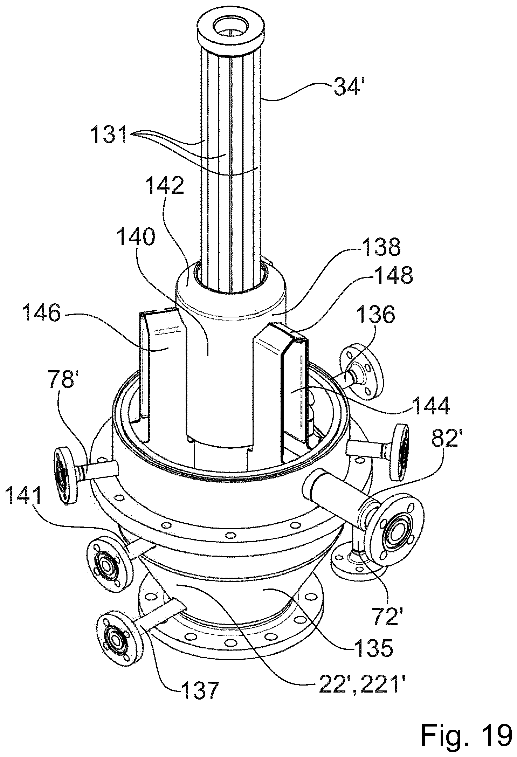

In der Ausführungsform gemäss Fig. 15 bis 20 ist die den Kondensationsraum 32 umschliessende Hohlwelle 280 hängend gelagert, wobei sie radial durch ein geschmiertes Umfangslager 126 geführt wird. Konkret wird das Radialkräfte aufnehmende Umfangslager in der Regel durch einen Gleitklotz in Form eines gehärteten Rings mit einer darauf aufgebrachten Gleitschicht, z.B. aus Graphit oder Teflon, gebildet.

Das Unterteil der Vorrichtung gemäss Fig. 15 bis 20 weist einen im Wesentlichen zylindrischen Abschnitt auf, der in Förderrichtung, d.h. in Richtung nach unten hin, an die Behandlungskammer 16 anschliesst und eine Materialauffangkammer 130 bildet. Die obere Wand 132 der Materialauffangkammer 130 schliesst dabei unmittelbar an das Umfangslager 126 an, ist ringförmig ausgestaltet und derart angeordnet, dass deren Öffnung bündig mit der Öffnung des ringförmigen Umfangslager 126 verläuft und eine Materialdurchtrittsöffnung 134 bildet. Durch diese gelangt das Material von der Behandlungskammer in die Materialauffangkammer 130, wobei das Umfangslager 126 zusätzlich eine Schmierung mit Material erfährt.

Die Materialauffangkammer 130 mündet unten in einen daran anschliessenden Austragstrichter 221', welcher sich nach unten hin konisch verjüngt.

Der die Materialauffangkammer 130 im Umfang umschliessende zylindrische Mantel 133 und der den Austragstrichters 221' umschliessende Mantel 135 sind doppelwandig ausgebildet und je mit einer Heizmittelzuführung 136 bzw. 137 und einem Heizmediumausgang 139 bzw. 141 strömungsverbunden. Der Vakuumanschluss 56 führt von der Materialauffangkammer 130 durch deren doppelwandigen Mantel 133 weg.

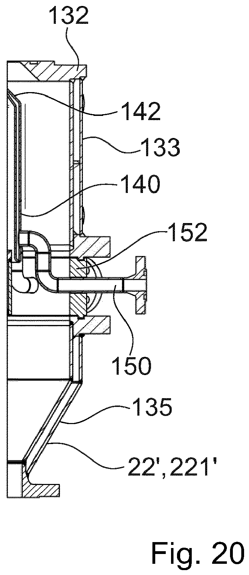

In der Ausführungsform gemäss Fig. 15 bis 20 erstreckt sich der Kondensator 34' in die Materialauffangkammer 130 und weist eine Vielzahl an Kondensatorrohren 131 auf. Der Kondensator 34' ist in diesem seinem untersten Bereich von einer Zarge 138 umgeben, welche in ihrem unteren Bereich 140 zylindrisch ausgebildet ist und sich in ihrem oberen Bereich 142 in Richtung zu ihrem oberen Ende hin konisch verjüngt. Im zylindrischen unteren Bereich 140 der Zarge sind drei in Umfangsrichtung verteilt angeordnete Durchlässe 144 angeordnet, mittels welcher die Materialauffangkammer 130 mit dem Kondensationsraum 32 strömungsverbunden ist und welche mindestens die gleiche freie Querschnittsfläche aufweisen wie der Vakuumanschluss. Um die Durchlässe 144 ist jeweils ein radial vom zylindrischen unteren Bereich 140 der Zarge abstehender Erker 146 ausgebildet, dessen oberes Ende 148 giebeldachförmig ausgestaltet ist. Sowohl die Wand des zylindrischen unteren als auch des konischen oberen Bereichs 140 bzw. 142 der Zarge sowie die Wand der Erker 146 sind als Doppelwand ausgebildet, wobei der dabei gebildete Hohlraum derart ausgestaltet ist, um von einem über eine in Fig. 20 gezeigte Heizmediumzuleitung 150 zugeführtes Heizmedium durchströmt zu werden.

Durch die Zarge 138 wird der Kondensator 34 davor geschützt, dass sich Material auf diesem absetzt und durch Abkühlung erstarren kann. Zudem wird durch die Erker 146 erreicht, dass die Durchlässe 144 zum Kondensationsraum 32 hin nicht durch Material bedeckt werden, wodurch wiederum gewährleistet wird, dass auch im Kondensationsraum 32 wirksam ein hohes Vakuum angelegt werden kann. Desweiteren wird durch die Giebeldachform des oberen Endes 148 der Erker 146 erreicht, dass das von der Behandlungskammer 16 aufgefangene Material gut abfliessen kann, was durch die Beheizung der Zarge 138 und der Erker 146 zusätzlich begünstigt wird.

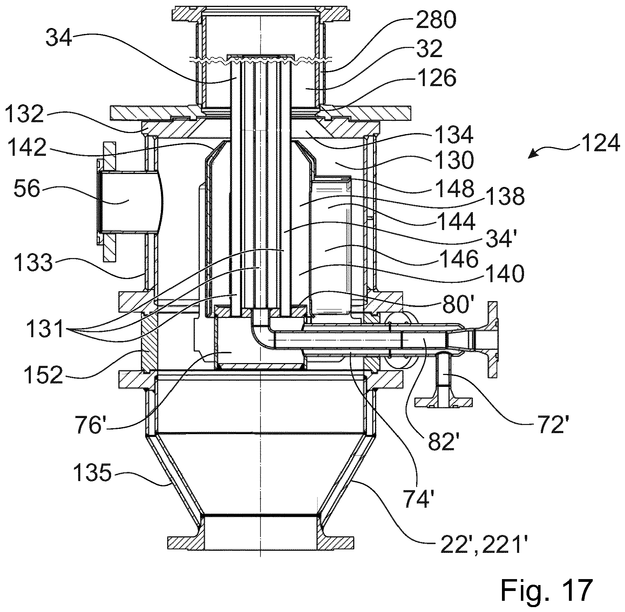

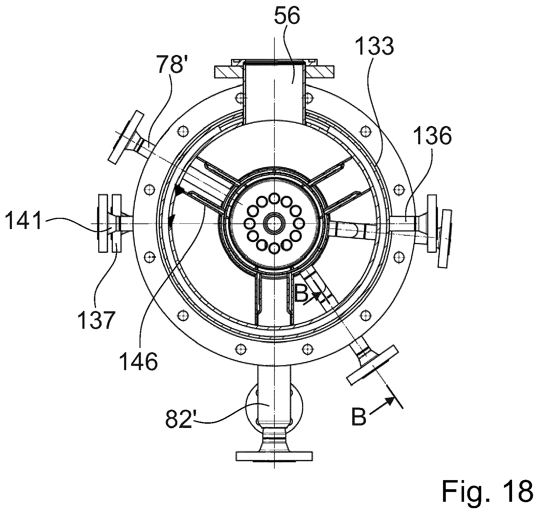

Unterhalb der Kondensatorrohre 131 ist ein Kühlmediumreservoir 76' ausgebildet, welches mit einer Kühlmediumzuleitung 72' verbunden ist und welches in einen Teil der Kondensatorrohre 131 mündet. Die von den Kondensatorrohren 131 durchdrungene obere Wand des Kühlmediumreservoirs 76' bildet dabei den Kondensatorboden 80', auf welchem sich Kondensat bzw. Destillat sammelt, das über einen vom Kondensatorboden wegführenden Kondensatauslass 82' abgeführt werden kann. Der Kondensatauslass 82' ist dabei von einem Ringkanal umgeben, welcher als Kühlmediumzulauf 74' dient. Damit wird erreicht, dass die Kühlung des Kondensats beim Abführen und insbesondere beim Durchtritt durch den beheizten Mantel 133 der Materialauffangkammer 130 beibehalten werden kann. Wie insbesondere aus Fig. 17 und 18 ersichtlich ist, wird sowohl der Kühlmediumzulauf 74' als auch der Kühlmediumauslass 78' jeweils durch einen Erker 146 geführt. Damit wird einerseits verhindert, dass Material auf diese Leitungen gelangen und durch Abkühlung erstarren kann, was zur Bildung schwer zu entfernender Materialablagerungen führen könnte. Andererseits wird verhindert, dass sich Kühlmedium oder Kondensat durch etwaig auf den Kühlmediumzulauf bzw. auf den Kühlmediumauslass gelangendes Material in unerwünschter Art und Weise erhitzt werden kann.

Wie etwa in den Fig. 17 und 20 gezeigt ist die Materialauffangkammer 130 bzw. der diese umgebende zylindrische Mantel 133 über einen Zwischenflanschring 152 mit dem Austragstrichter 221' verbunden. Dieser Zwischenflanschring 152 ist mit den Erkern 146 verschweisst und dient somit als Halterung für den Kondensator 34. Somit ist der gesamte Kondensator 34 mitsamt den damit verbundenen Anschlüssen, insbesondere der Kühlmediumzuleitung 72', dem Kühlmediumauslass 78', dem Kondensatauslass 82' sowie der Heizmediumzuführung 136 (für den Mantel der Materialauffangkammer) und der Heizmediumzuleitung 150 (für Zarge und Erker), nach unten ausbaubar.

In der gezeigten Ausführungsform zweigt der Vakuumanschluss 56 wie erwähnt von der Materialauffangkammer 130 ab. Das Vakuum wird somit über die Materialauffangkammer 130 gezogen, nicht aber über direkten Anschluss an den Kondensationsraum 32. Dadurch, dass der Vakuumanschluss nicht direkt vor einem der in Umfangsrichtung um 120° versetzt angeordneten Erkern bzw. Durchlässen angeordnet ist, erfährt der beim Ziehen des Vakuums erzeugte Gasstrom eine Umlenkung, womit gewährleistet wird, dass eine Abscheidung von Tröpfchen aus den nichtkondensierbaren Gasen stattfindet und diese somit nicht in den Vakuumanschluss gelangen können. Alternativ dazu ist auch denkbar, dass das Vakuum an einen innenseitig am Mantel anschliessenden Ringkanal angelegt wird, von welchem wiederum gegenüber der Materialauffangkammer abgeschlossene Vakuumkanäle abzweigen. Dabei ist der Ringkanal gemäss dieser Ausführungsform vorzugsweise beheizt bzw. als eine von einem Heizmedium durchströmte Doppelwand ausgebildet, um eine unerwünschte Abkühlung bzw. Erstarrung des auszutragenden Materials zu verhindern.

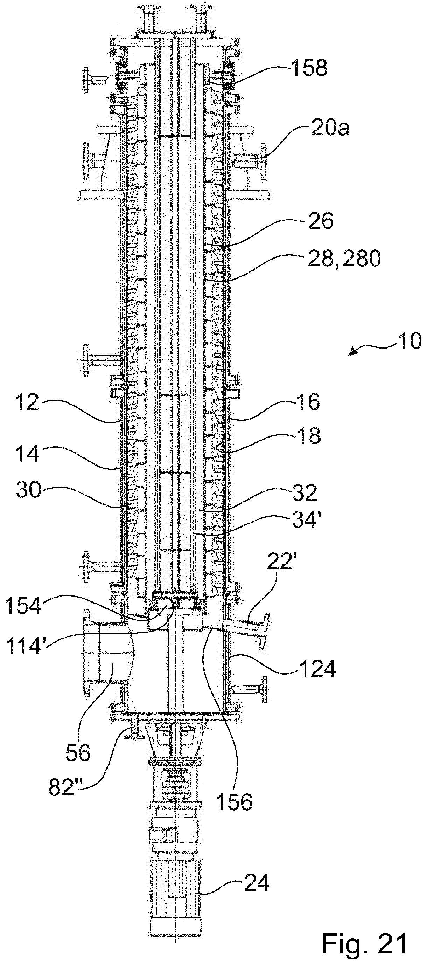

Gemäss der in Fig. 21 gezeigten weiteren Ausführungsform der erfindungsgemässen Vorrichtung ist das untere Ende des Kondensators 34' gegenüber dem Vakuumanschluss 56 nach oben versetzt angeordnet. In dieser Ausführungsform ist die Antriebseinheit 24' des Rotors 26 unten angeordnet. Die radiale Lagerung bzw. Führung der Rotorwelle wird in dieser Ausführungsform über ein trockenlaufendes Rollenlager 158 am oberen Ende des Rotors 26 bewerkstelligt. Im Sinne einer verbesserten Statik des Kondensators 34' weist dieser in der in Fig. 21 gezeigten Ausführungsform einen an seinem unteren Ende angeordneten Zapfen 114' auf, welcher durch eine Unterplatte 154 des Rotors 26 geführt wird.

Die Zufuhr des Materials erfolgt gemäss dieser Ausführungsform über zwei tangential ausgestaltete Materialeinlässe 20a. Material und Brüden, d.h. die austretenden Gase, werden in der Folge im Gleichstrom geführt.

Auslassseitig wird das Material über eine schräg angeordnete Materialtasse 156 einem bezüglich der Horizontalen leicht nach unten abgewinkelten Materialauslass 22' zugeführt.

Das Kondensat wiederum gelangt über einen Ringspalt in der Unterplatte 154 zu einem vertikal nach unten wegführenden Kondensatauslass 82''.

### Bezugszeichenliste

- 10: Vorrichtung
- 12: Gehäuse
- 14: Gehäusemantel
- 16: Behandlungskammer
- 18: Behandlungsfläche
- 19: Bereich des Vakuumanschlusses
- 20; 20a, 20b: Materialeinlass (tangential bzw. von oben)
- 21: Einlassbereich
- 22: Materialauslass
- 221: Austragstrichter
- 23: Auslassbereich
- 24: Antriebseinheit
- 26: Rotor
- 28; 280: Welle; Hohlwelle
- 29: Zentralstange der Welle
- 30: Streichelemente
- 301: Förderelement
- 302: Verteilelement
- 303: Wischerblätter
- 304: starre Streichelemente
- 32: Kondensationsraum
- 34: Kondensator
- 36: Durchlassöffnungen
- 38: winkelförmiges Stegblech
- 38a, b: Dachseiten des Stegblechs
- 40: Förderrippe
- 42: Scherkante des Stegblechs
- 44: radiale Aussenkante der Förderrippe
- 46: Zentralbereich
- 48: Zahn des Verteilelements
- 50: Scherkante der Zähne
- 52: Oberteil
- 54: Labyrinthdichtung
- 56: Vakuumanschluss
- 58: (Verbindungs-)Blech
- 60: Spritzschutzmantel
- 62: Lagerschuh
- 64: Platte (oberer Abschluss der Hohlwelle)
- 66: Zapfen
- 68: Innenrohr
- 681: Aussenwand des Innenrohrs
- 682: Innenwand des Innenrohrs
- 683: Innenrohr-Kühlmediumzirkulationskanal
- 69: Fenster
- 70: Aussenrohr
- 701: Aussenwand des Aussenrohrs
- 702: Innenwand des Aussenrohrs
- 703: Aussenrohr-Kühlmediumzirkulationskanal
- 72: Kühlmediumzuleitung
- 74: Kühlmediumzulauf
- 76: Kühlmediumreservoir
- 78: Kühlmediumauslass
- 80: Kondensatorboden
- 81: Kondensatsammeltasse
- 82: Kondensatauslass
- 83: zylindrische Schürze
- 85: Schutzblech
- 91: Abdeckblech
- 92: Buchse
- 94: Förderwendel
- 96; 960: Verteileinrichtung; Verteilteller
- 98: Tellerboden
- 100: Tellerwand
- 102: Verteilöffnungen
- 104: Vorsprung an Tellerrand
- 106: U-Schienen (Smith-Rotor)
- 108: Kondensatorauflage
- 110: Zylinder
- 112a, b: unteres, zentrales Rotorlager
- 114: Zapfen des Kondensators
- 116: Oberplatte des Rotors
- 118: konische Behälter des Materialauslasses
- 120: Schiene
- 122: Leiste
- 124: Unterteil
- 126: Umfangslager
- 130: Materialauffangkammer
- 131: Kondensatorrohr
- 132: obere Wand der Materialauffangkammer
- 133: Mantel der Materialauffangkammer
- 134: Materialdurchtrittsöffnung
- 135: Mantel des Austragstrichters
- 136: Heizmediumzuführung zu Mantel der Materialauffangkammer
- 137: Heizmediumzuführung zu Mantel des Austragstrichters
- 138: Zarge
- 139: Heizmediumausgang von Mantel der Materialauffangkammer
- 140: zylindrischer unterer Bereich der Zarge
- 141: Heizmediumausgang von Mantel des Austragstrichters
- 142: konischer oberer Bereich der Zarge
- 144: Durchlass
- 146: Erker
- 148: giebeldachförmiges oberes Ende des Erkers
- 150: Heizmediumzuleitung
- 152: Zwischenflanschring
- 154: Unterplatte des Rotors
- 156: Materialtasse
- 158: Rollenlager
- A: Achsrichtung

## Patentansprüche

1. Vorrichtung zur thermischen Behandlung von Material, insbesondere zur thermischen Auftrennung von im Material enthaltenen Materialkomponenten, umfassend
ein Gehäuse (12) mit einem beheizbaren Gehäusemantel (14), welcher eine Behandlungskammer (16) umschliesst und eine rotationssymmetrische, sich in Achsrichtung (A) erstreckende Behandlungsfläche (18) bildet,
einen in einem Einlassbereich (21) des Gehäuses angeordneten Materialeinlass (20) zum Einführen des zu behandelnden Materials in die Behandlungskammer,
einen in einem Auslassbereich (23) des Gehäuses angeordneten Materialauslass (22) zum Austragen des Materials aus der Behandlungskammer, und
einen in der Behandlungskammer angeordneten und sich koaxial erstreckenden, antreibbaren Rotor (26) zur Erzeugung eines Materialfilms auf der Behandlungsfläche, wobei der Rotor eine Welle (28) umfasst, über deren Umfang verteilt Streichelemente (30) angeordnet sind, deren radial äusserstes Ende von der Behandlungsfläche beabstandet ist,
einen Kondensationsraum (32), in welchem ein Kondensator (34) angeordnet ist und in welchen bei der thermischen Behandlung aus dem Material entweichende gasförmige Materialkomponenten gelangen können,
einen Kondensatauslass (82) zum Austragen der im Kondensationsraum (32) kondensierten Materialkomponenten und
einen mit dem Kondensationsraum (32) strömungsverbundenen Vakuumanschluss (56) zum Abziehen der nicht-kondensierten gasförmigen Materialkomponenten,
**dadurch gekennzeichnet, dass** der Vakuumanschluss (56) in einem in Transportrichtung des Materials betrachtet nach der Behandlungsfläche (18) liegenden Bereich des Gehäuses (12) angeordnet ist.

2. Vorrichtung gemäss Anspruch 1, **dadurch gekennzeichnet, dass** der Vakuumanschluss (56) derart ausgestaltet ist, ein Vakuum direkt am Kondensationsraum (32) anzulegen.

3. Vorrichtung gemäss einem der vorhergehenden Ansprüche, **dadurch gekennzeichnet, dass** der Materialauslass (22) in Achsrichtung nach unten führt und insbesondere in Form einer sich in Achsrichtung an die Behandlungskammer (16) anschliessenden Austragsvorrichtung ausgebildet ist.

4. Vorrichtung gemäss einem der vorhergehenden Ansprüche, **dadurch gekennzeichnet, dass** sie ein unteres Rotorlager (112a; 112b) aufweist, in welchem der Rotor (26) in seinem materialauslassseitigen Endbereich gelagert ist.

5. Vorrichtung gemäss Anspruch 4, **dadurch gekennzeichnet, dass** das untere Rotorlager (112a; 112b) zentral angeordnet ist.

6. Vorrichtung gemäss einem der vorhergehenden Ansprüche, **dadurch gekennzeichnet, dass** sie zudem eine Verteileinrichtung (96) zum Verteilen des über den Materialeinlass (20; 20a, 20b) eingeführten Materials auf der Behandlungsfläche (18) aufweist, wobei die Verteileinrichtung in Form eines am Rotor (26) angeordneten Verteiltellers (960) mit einem Tellerboden (98) und einer den Tellerboden radial umgebenden und vorzugsweise im Wesentlichen senkrecht dazu verlaufenden Tellerwand (100) vorliegt und die Tellerwand in Umfangsrichtung voneinander beabstandete Verteilöffnungen (102) aufweist.

7. Vorrichtung gemäss einem der vorhergehenden Ansprüche, **dadurch gekennzeichnet, dass** die Welle als Hohlwelle vorliegt, welche den Kondensationsraum (32) umschliesst und welche Durchlassöffnungen (36) aufweist, durch die bei der thermischen Behandlung aus dem Material entweichende gasförmige Materialkomponenten in den Kondensationsraum (32) gelangen können.

8. Vorrichtung gemäss Anspruch 7, **dadurch gekennzeichnet, dass** sie im Einlassbereich (21) einen die Hohlwelle (280) vollständig umgebenden Spritzschutzmantel (60) aufweist.

9. Vorrichtung gemäss Anspruch 8, **dadurch gekennzeichnet, dass** der Spritzschutzmantel (60) von Förderelementen (301) und von jeweils zwei in Umfangsrichtung aufeinanderfolgende Förderelemente verbindenden Blechen (58) gebildet ist.

10. Vorrichtung gemäss einem der vorhergehenden Ansprüche, **dadurch gekennzeichnet, dass** der Kondensator (34) ein Innenrohr (68) und ein das Innenrohr konzentrisch umgebendes Aussenrohr (70) umfasst, welche jeweils eine Aussenwand (681 bzw. 701) und eine Innenwand (682 bzw. 702) aufweisen, die mindestens bereichsweise voneinander beabstandet sind und derart im Innenrohr einen Innenrohr-Kühlmediumzirkulationskanal (683) und im Aussenrohr einen Aussenrohr-Kühlmediumzirkulationskanal (703) bilden, und der Innenrohr-Kühlmediumzirkulationskanal und der Aussenrohr-Kühlmediumzirkulationskanal miteinander strömungsverbunden sind.

11. Vorrichtung gemäss Anspruch 10, **dadurch gekennzeichnet, dass** in einen der beiden Kühlmediumzirkulationskanäle (683 bzw. 703) eine Kühlmediumzuleitung (72) mündet und vom jeweils anderen Kühlmediumzirkulationskanal (703 bzw. 683) ein Kühlmediumauslass (78) wegführt.

12. Vorrichtung gemäss einem der vorhergehenden Ansprüche, **dadurch gekennzeichnet, dass** der Kondensator (34) im Auslassbereich (23) konzentrisch von einem statischen Abdeckblech (91) umgeben ist.

13. Verwendung der Vorrichtung gemäss einem der vorhergehenden Ansprüche zur thermischen Behandlung von Material in einem Prozessdruckbereich von 0,001 bis 50 mbar, vorzugsweise 0,001 mbar bis 1 mbar.
